# EUROPEAN PATENT SPECIFICATION

(11) **EP 2 135 363 B1**
(45) Date of publication and mention of the grant of the patent: **11.05.2011**
(21) Application number: 08723535.4
(22) Date of filing: 17.03.2008
(51) Int. Cl.: H04W 48/16, H04W 48/18

(54) **METHOD AND DETECTION DEVICE FOR DETERMINING WHETHER A SPECIFIC CHANNEL IS AVAILABLE FOR USE IN AN ENVIRONMENT IN WHICH MULTIPLE NETWORKS ARE COEXISTABLE**
VERFAHREN UND DETEKTORGERÄT ZUR BESTIMMUNG DER VERFÜGBARKEIT EINES BESTIMMTES KANALS IN EINER UMGEBUNG MIT DER KOEXISTENZ MEHRERER NETZWERKE
PROCÉDÉ ET APPAREIL DE DÉTECTION POUR DÉTERMINER SI UN CANAL SPÉCIFIQUE EST DISPONIBLE POUR SON UTILISATION DANS UN ENVIRONNEMENT OÙ PLUSIEURS RÉSEAUX PEUVENT COEXISTER

(30) Priority: 16.03.2007 US 895421 P; 22.03.2007 KR 20070028296; 09.05.2007 KR 20070044956; 09.07.2007 KR 20070068763
(43) Date of publication of application: 23.12.2009
(73) Proprietor: LG Electronics Inc., Seoul 150-721 (KR)
(72) Inventor: JEON, Beom Jin, Mapo-gu, Seoul 121-210 (KR)
(74) Representative: Urner, Peter
(86) International application number: PCT/KR2008/001498
(87) International publication number: WO 2008/114986

(56) References cited:
- EP-A- 1 217 781
- EP-A- 1 465 354
- EP-A1- 1 619 836
- WO-A-2005/062728
- JP-A- 2006 067 438
- US-A1- 2005 105 505
- US-A1- 2005 185 743
- US-A1- 2005 220 230
- US-A1- 2006 114 812
- US-A1- 2006 126 670
- TEJAS BHATT ET AL: "Initial Synchronization for 802.6e Downlink" SIGNALS, SYSTEMS AND COMPUTERS, 2006. ACSSC '06. FORTIETH ASILOMA R CONFERENCE ON, IEEE, PI, 1 October 2006 (2006-10-01), pages 701-706, XP031081135 ISBN: 978-1-4244-0784-2

## Description

### Technical Field

The present invention relates to a network, and more particularly to a method and a detection device for determining whether to use a specific channel for performing communication in coexistence of different kinds of networks, in an environment in which a plurality of networks coexist.

### Background Art

Recently, a Bluetooth or wireless personal area network (WPAN) technology in which a wireless network is established between a relatively small number of digital devices in a restricted space such as home or a small office and audio or video data can be transmitted/received between the devices has been developed. The WPAN may be used for exchanging information between the relatively small number of devices in a relatively small space and can realize low-power low-cost communication between the digital devices.

If communication is performed by a wireless technology, lines such as cables for connecting the devices can be eliminated. In addition, data information can be directly exchanged between the devices by the wireless network between the devices. Examples of the device for performing the communication in the network include all digital devices such as a computer, a personal digital assistant (PDA), a notebook type computer, a digital television receiver, a camcorder, a digital camera, a printer, a microphone, a speaker, a headset, a barcode reader, a display and a mobile phone.

US 2005/185743 A1 describes an apparatus providing burst and timing synchronization of an input signal used for high-rate indoor wireless communication, comprising. A burst synchronizer is arranged to detect the onset of a burst of the input signal and provides an onset indicator. A frequency offset corrector is arranged to correct the frequency offset between adjacent preamble sequences of frames within the burst of the input signal based on the onset indicator and provides a frequency offset corrected signal.

US 2006/114812 A1 describes an OFDMA-based cellular system, a frame of a downlink signal including a common slot and traffic slots. The common slot includes a synchronization preamble and a cell search preamble. The synchronization preamble has a structure for synchronizing time and frequency, and the cell search preamble has a cell search structure. The traffic slot includes pilot symbols provided on the time and frequency axes. A cyclic prefix is used to estimate initial symbol synchronization, and the initial symbol synchronization and the synchronization preamble are used to synchronize the frame. The synchronization frame and the cell search preamble are used to estimate time and frequency synchronization.

US 2005/105505 A1 describes a preamble generator for a transceiver of a wireless local area network (WLAN) includes a first preamble data memory. The transceiver of the WLAN is configured to transmit data transmission burst signals, each including a preamble data sequence signal and a data section signal. The preamble data sequence signal is associated with the data transmission channel of said wireless local area network (WLAN).

EP 1 619 836 A relates to a method for transmitting information in a telecommunication system comprising multiple local networks, which information is to be transmitted within at least one frame FRO. The method according to the invention includes a section creation step for generating at least one section to be included in said frame FR0, which section includes multiple slots, each slot being allocated to a given terminal for enabling said terminal to transmit information.

US 2005/220230 A1 describes a carrier detecting circuit in a receiver of a wireless device having a circuit for determining a power value of a received signal, a circuit for determining a correlation value between a preamble included in the received signal and a predetermined preamble pattern which characterizes a communication system to which the wireless device belongs, a circuit for judging that a carrier is detected and tentatively instructing a demodulating circuit of the wireless device to start a demodulating process of a signal if the power value exceeds a first threshold value or the correlation value exceeds a second threshold value.

WO 2005/062728 A discloses a method for constructing a frame preamble in an OFDM wireless communication system, and a method for acquiring frame synchronization and searching cells using the preamble. The preamble is arranged at the beginning of a frame and constructed of a pattern repeated an integer number of times, and a CP.

EP 1 465 354 describes an incident signal containing a preamble including a training sequence having a series of pulses whose polarity and time shifts are defined by respective polarity code and time-hopping code. The method comprises a digital cross-correlation of the received signal with said training sequence, said cross-correlation step including algebraically summing in accordance with said polarity code (aj), windows of said received signal, the starting points of said windows being determined by said time-hopping code (cj), and a detection step for detecting the end point (nsynchro) of the preamble from the result of said cross-correlation step.

### Disclosure of Invention

Accordingly, the present invention is directed to a method and a detection device for determining whether to use a specific channel for performing communication in coexistence of different kinds of networks, in an environment in which a plurality of networks coexist that substantially obviate one or more problems due to limitations and disadvantages of the related art.

An object of the present invention devised to solve the problem lies on a method and a device capable of preventing collision between radio resources in different kinds of networks or allowing different kinds of networks to suitably coexist in an environment in which a plurality of networks can coexist. The object is solved by the features of the independent claims.

At the determining, at least one correlation value generated by correlating preamble information in the received signal and stored preamble information is used.

At this time, if the at least one correlation value exceeds a predetermined threshold, the specific channel is determined not to be available and, if the at least one correlation value does not exceed the predetermined threshold, the specific channel is determined to be available.

The networks periodically transmit a signal corresponding to the preamble information in a plurality of directions.

The preamble information may be filtered such that original preamble signals of the one or more networks correspond to a reception-side channel bandwidth.

At the determining, down-sampled signal of the received signal may be used.

The preamble information may be composed of a pattern generated in consideration of all signals received from a plurality of channels.

At the determining, a measured period between at least two correlation values may be further used.

The received signal may be a preamble signal composed of a narrowband signal.

In addition, the received signal may be composed of a narrowband signal with a pattern in which same data is repeated.

At this time, the received signal may be filtered using at least one of a narrowband filter and a wideband filter.

Further examples out of the scope of the invention are mentioned in the following, for illustrative purposes. In this respect :

Preferably, there is a method for receiving a signal for detection in an environment in which one or more networks are coexistable, the method including: receiving a signal for detection composed of a pattern, in which same data is repeated, from a network which performs communication using a specific channel among the one or more networks, correlating the signal for detection with at least one preamble information which is pre-stored and identifying the network which performs the communication on the specific channel.

Preferably, there is a method for performing communication in an environment in which one or more networks are coexistable; the method including: listening to a specific channel to start a first network, and receiving at least one common code on the specific channel from a second network, the at least one common code being shared between the one or more different kinds of networks including the first network and the second network, wherein the at least one common code includes service level information which is provided from the second network transmitting the at least one common code.

The at least one common code may be repeatedly included in a beacon which is transmitted by the second network.

The service level information may be determined by at least one of a service type and a sensitivity level of the service for interference, the service type including a streaming service and a file transfer service.

The method may further include at least one of: if the second network is the same type with the first network, checking whether the service level is proper or not using the at least one common code; if the service level is not proper, checking whether the service level is changeable or not; if the service level is changeable, starting negotiation with the second network; and if the service level is not changeable, searching for another specific channel frequency.

The method may further include at least one of: if the second network is the different type with the first network, checking whether the service level is proper or not using the common codes; and if the service level is not proper, searching for another specific channel frequency.

The method may further include at least one of: if the second network is the different type with the first network, checking whether the service level is proper or not using the common codes; if the service level is proper, starting the first network using the specific channel frequency; receiving the common codes indicating that interference occurs, from the second network; and searching for another specific channel frequency.

The method may further include: if the second network is the different type with the first network, checking the service level using the common codes and starting the first network; receiving the common codes indicating that interference occurs, from the second network; and performing at least one a method for reducing transmission power and a method for reducing a data transfer rate.

The specific channel may include one or more sub channels composed of a narrow band, the one or more sub channels being specified to each of the one or more different types of networks according to provided services and being used for allowing each of the one or more different types of networks to transmit beacons.

### Advantageous Effects

According to the embodiments disclosed in the present specification, it can be checked whether a system using a channel exists when the channel is desired to be used.

According to the embodiments disclosed in the present specification, it is possible to increase a range for detecting a signal although same power is used. Accordingly, it is possible to increase a probability in which another network can be detected and prevent a communication interruption which may occur when several networks simultaneously use the same frequency band.

According to the embodiments disclosed in the present specification, it is possible to more efficiently allow a plurality of different types of networks to coexist.

According to the embodiments disclosed in the present specification, it is possible to detect the existence of a different type of network and a region by using common codes. Further, it is possible to allow different types of networks to coexist or more efficiently allow entrance to the same type of network by including information about a service level in the common codes. In addition, it is possible to prevent inequality or disadvantage, which is caused because different types of networks have different ranges, by repeatedly using the common codes.

According to the embodiments disclosed in the present specification, it is possible to suppress influence of interference and prevent collision between signals although a plurality of different types of networks exist on one channel, by including a plurality of sub bands composed of a narrow band in one channel.

### Brief Description of Drawings

The accompanying drawings, which are included to provide a further understanding of the invention, illustrate embodiments of the invention and together with the description serve to explain the principle of the invention.

In the drawings:
FIG. 1 is a view illustrating a case where one or more different types of networks can coexist;
FIG. 2 is a flowchart illustrating a method for detecting a different type of network according to an embodiment of the present invention;
FIG. 3 is a view illustrating the method for detecting the different type of network according to the embodiment of the present invention;
FIG. 4 is a block diagram showing a detecting device according to an embodiment of the present invention;
FIG. 5 is a view illustrating a method for efficiently detecting a different type of network according to an embodiment of the present invention;
FIG. 6 is a view illustrating a method for detecting a different type of network according to an embodiment of the present invention;
FIG. 7 is a view illustrating a method for detecting a different type of network according to an embodiment of the present invention;
FIG. 8 is a view illustrating a method for detecting a plurality of channels included in a specific channel bandwidth according to an embodiment of the present invention;
FIG. 9 is a view showing a method for detecting a different type of network using a preamble transmission period according to an embodiment of the present invention;
FIG. 10 is a view illustrating a case where the intensity of a signal is reduced;
FIG. 11 is a flowchart illustrating a method for expanding a detectable range according to an embodiment of the present invention;
FIG. 12 is a view illustrating a method for configuring a signal to be detected by a narrowband signal according to an embodiment of the present invention;
FIG. 13 is a view illustrating the effect according to an embodiment of the present invention;
FIG. 14 is a view illustrating the effect obtained by using the signal to be detected, which is composed of the narrowband signal, according to an embodiment of the present invention;
FIG. 15 is a block diagram showing the configuration of a detection side according to an embodiment of the present invention;
FIG. 16 is a block diagram showing the configuration of a detection side according to another embodiment of the present invention;
FIG. 17 is a block diagram showing the configuration of a detection side according to another embodiment of the present invention;
FIG. 18 is a view illustrating a case where a range in which the signal to be detected can be detected is increased by the embodiment of the present invention;
FIG. 19 is a view illustrating an example of a method for detecting a different type of network in an environment, in which one or more different types of networks coexist, and serving a better understanding of the present invention;
FIG. 20 is a view illustrating a case where beacon regions of one or more different types of networks are different from each other and serving a better understanding of the present invention;
FIG. 21 is a view illustrating an example of a method for recognizing different types of coexistable networks in a case where beacon regions of one or more different types of networks are different from each other and serving a better understanding of the present invention;
FIG. 22 is a view illustrating a case where one or more different types of networks coexist and serving a better understanding of the present invention;
FIG. 23 is a view illustrating an example of a method for informing that interference from a different type of network is received in a case where one or more different types of networks, which perform communication via one channel, coexist, and serving a better understanding of the present invention;
FIG. 24 is a view illustrating an example of a method for transmitting beacons of networks in a case where one or more different types of networks communicate with each other on one channel and serving a better understanding of the present invention;
FIG. 25 is a flowchart serving better understanding of the present invention;
FIG. 26 is a flowchart relating to a device having a high service level and serving a better understanding of the present invention;
FIG. 27 is a flowchart relating to a device having a low service level and serving a better understanding of the present invention; and
FIG. 28 is a flowchart serving a better understanding of the present invention.

### Best Mode for Carrying Out the Invention

Reference will now be made in detail to the preferred embodiments of the present invention, examples of which are illustrated in the accompanying drawings. Wherever possible, the same reference numbers will be used throughout the drawings to refer to the same or like parts.

Hereinafter, exemplary embodiments of the present invention will be described in detail with reference to the accompanying drawings. For example, in the following description, a coordinator, a device, a preamble, and common codes are described, but the present invention is not limited to these terms. The term "device" may be designated as a term "apparatus" or "equipment", which has the same meaning as the device. The term "preamble" may be designated as a term representing information for distinguishing between networks, which has the same meaning as the preamble. The term "common codes" may be designated as a term representing a signal which can be shared between one or more different types of networks, which has the same meaning as the common codes.

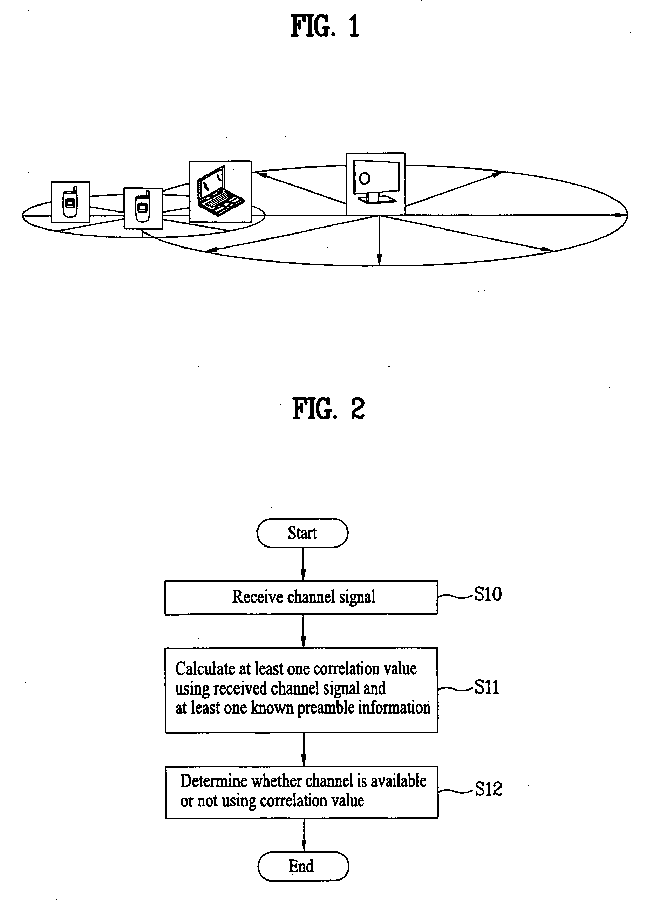

FIG. 1 is a view illustrating a case where one or more different types of networks can coexist.

Different types of networks are different from each other in a channel coding method or a modulation method as well as a basic communication specification such as a transfer rate. In this case, a signal transmitted in a different type of network is treated as noise and communication may be interrupted by the signal transmitted in the different type of network. Accordingly, in order to prevent signals of different types of networks which coexist from being interrupted by each other, communication will be started in consideration of such a situation.

One or more different types of networks may coexist in the same space. Although all the different types of networks perform communication in the same space, if the networks use different frequency channels, the signal of each network does not interrupt the communication of the other networks such that coexistence is appropriately realized.

Accordingly, a method for searching for a channel before the network is started, checking whether a network which first performs communication in the channel exists, and using another channel if a different type of network which performs the communication is detected may be used. It is preferable that, before the network is started, it is checked whether a network which is established in a channel to be used exists. That is, in a case where a different type of network which is previously established in a channel to be used exists, communication can be performed using another empty channel.

First, it should be checked whether a different type of network occupies a specific communication region. That is, if a different type of network which already performs the communication exists, the different type of network can be detected using a signal transmitted from the different type of network. Here, the specific communication region may be arbitrarily defined, but, in the present specification, may be defined as a region in which, when a beacon of a network is broadcasted or a specific signal of the network is transmitted using a single channel, the beacon or the specific signal can be normally received, that is, a beacon region.

Although a network occupies a specific communication region so as to perform communication, if a device which starts another network does not recognize the communication region of the network via the beacon of the network and the specific signal of the network, a phenomenon that two or more different types of networks coexist in an opened state cannot be prevented and communication may be interrupted.

FIG. 2 is a flowchart illustrating a method for detecting a different type of network according to an embodiment of the present invention.

A device checks whether a signal transmitted via a specific channel is present in order to check whether communication can be performed via the specific channel or not. If the signal received by the device is not present, it is indicated that a network using the specific channel does not exist. In this case, the communication can be performed via the specific channel.

If the signal received by the device is present, it is checked whether the received signal is a signal transmitted from the network using the specific channel or noise. If it is checked that the signal received by the device is noise, it is indicated that the network using the specific channel does not exist. Even in this case, the communication can be performed via the specific channel.

If the signal received by the device corresponds to the signal transmitted from a specific system, it is indicated that the network using the specific channel exists. In this case, the communication can be performed using another channel region, without using the specific channel.

The method for detecting the different type of network in an environment in which a plurality of networks can coexist, for example, a method for determining whether the specific channel is available or not, will be described in detail with reference to FIG. 2.

First, in a step S10, a device which will enter a communication region and perform the communication via a specific channel receives a signal transmitted via the specific channel.

In a step S11, at least one correlation value is calculated using the received channel signal and at least one piece of known preamble information of the device which receives the signal. The step S11 is an example of a method which can be performed in order to check whether the signal received by the device is the signal transmitted from the network using the specific channel or noise. Accordingly, information which can distinguish between the networks can be used instead of the preamble information. This information may be called a signal to be detected in the detection of the different type of network. Instead of the calculation of the correlation value, any method which can check how many portions of one signal and another signal are matched to each other may be used.

The preamble information for calculating the correlation value corresponds to the plurality of networks which can coexist. In other words, each network has the preamble information as the information which can distinguish between the networks. If the pattern of the preamble transmitted from the network varies according to the networks, it is possible to distinguish between the networks using the preamble.

It is preferable that the device, which wants to determine whether the specific channel is available or not, previously knows the preamble information of the networks. The device may store the preamble information of the coexistable networks in a memory included in the device and use the preamble information when it is checked whether the specific channel is available or not. Alternatively, if necessary, the preamble information of the coexistable networks may be received from a scheduling unity and may be used when the specific channel is available or not.

Finally, in a step S12, it is determined that the specific channel is available or not, using at least one correlation value. If the preamble information of the networks known by the device, and the signal received via the specific channel are correlated and the preamble information is matched to the signal received via the specific channel, it is possible to detect the correlation value. If the device knows plural pieces of preamble information of the network, the plural pieces of preamble information and the signal received via the specific channel are sequentially or simultaneously correlated so as to detect the correlation value.

If the result of correlating the plural pieces of preamble information and the signal received via the specific channel is ideal, the correlation value can be detected only when the preamble information and the received signal are matched to each other. Accordingly, if the correlation value is detected, it is determined that the network corresponding to the preamble which generates the detected correlation value exists and it is determined that the specific channel cannot be used.

In contrast, if the result of correlating the plural pieces of preamble information and the signal received via the specific channel is not ideal, a partial signal can be detected even when the preamble information and the received signal are not matched to each other. If the number of results of correlating the plural pieces of preamble information and the signal received via the specific channel is plural, they are considered as correlation values for the correlations.

If one or a plurality of correlation values is generated, the device may determine whether the specific channel is available or not, using the generated correlation value. For example, if the generated correlation value exceeds a predetermined threshold, it is determined that the network corresponding to the preamble used for generating the correlation value exists and thus it is determined that the specific channel is not available. In contrast, if the generated correlation value is smaller than the predetermined threshold, it is determined that the received signal is noise and thus it is determined that the specific channel is available.

For example, if the plurality of correlation values are generated, it is determined that the network corresponding to the preamble used for generating a correlation value corresponding to a maximum value among the generated correlation values exists and thus it is determined that the specific channel is not available. Even in this case, only when the correlation value corresponding to the maximum value among the generated correlation values exceeds the predetermined threshold, it is determined that the network corresponding to the preamble used for generating the correlation value corresponding to the maximum value exists and thus it is determined that the specific channel is not available. In contrast, if all the generated correlation values are smaller than the predetermined threshold, it is determined that the received signal is noise and thus it is determined that the specific channel is available.

For example, when the received signal is correlated using the plural pieces of preamble information and the preamble in which the correlation value larger than the predetermined threshold is detected exists, it is determined that the network corresponding to the detected preamble exists and thus it is determined that the specific channel is not available. In contrast, if the generated correlation values are not detected or are smaller than the predetermined threshold, it is determined that the received signal is noise and thus it is determined that the specific channel is available.

After it is determined whether the channel is available or not, the present embodiment is finished.

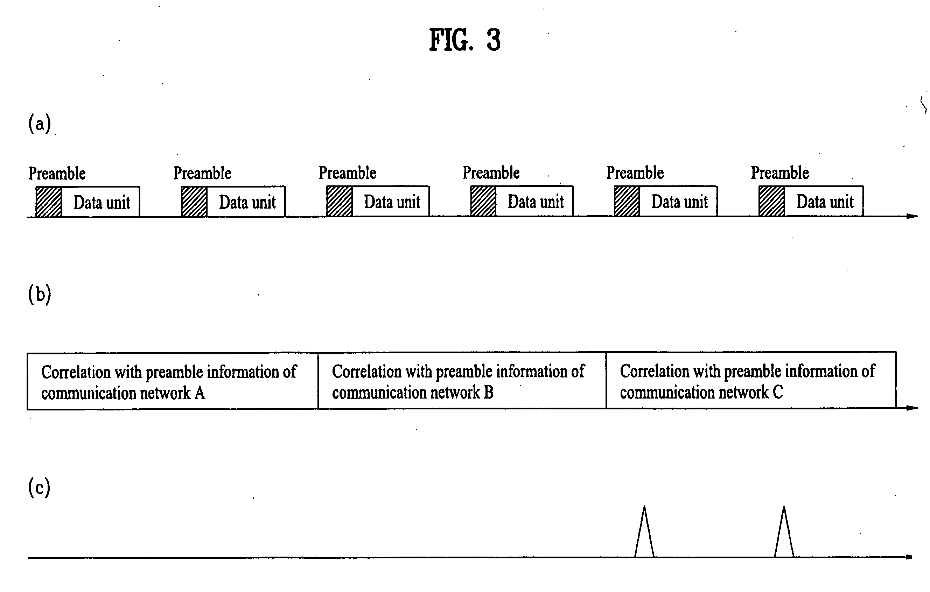

FIG. 3 is a view illustrating the method for detecting the different type of network according to the embodiment of the present invention.

A process corresponding to the steps S10, S11 and S12 of FIG. 2 will be described in more detail with reference to FIG. 3.

First, FIG. 3(a) shows signals received by the device which will perform communication using the specific channel. The signals received by the device include preamble signals. Another data may be received together with the preamble signals, but, in order to allow the device to determine whether the specific channel is available or not, only the preambles may be received.

FIG. 3(b) shows the preamble information of the network, which is stored in the memory included in the device or is received by the device which will perform the communication using the specific channel. As shown in FIG. 3(b), for example, three networks, that is, networks A, B and C, may coexist and the device knows the preamble information of the networks A, B and C. If the device receives the signal, the device correlates the three pieces of preamble information and the received signal.

As shown in FIG. 3(b), the devices receive a plurality of signals via the specific channel and sequentially correlates the plurality of signals and the preamble information of the networks A, B and C, respectively. Two signals which are first received and the preamble information of the network A are correlated. Then, two signals which are subsequently received and the preamble information of the network B are correlated. Finally, two signals which are subsequently received and the preamble information of the network C are correlated.

FIG. 3(c) shows the result of correlating the signals received by the device and the preambles of the networks known by the device. It can be seen from FIG. 3(c) that, as the result of correlating the signals received by the device and the preambles of the networks known by the device, only the result of correlating the two signals which are finally received and the preamble information of the network C is detected. Accordingly, the device can know that the specific channel is used by the network C. In this case, the device determines that the specific channel is not available, and searches for and uses another channel or uses the specific channel when it is determined that the specific channel is available after a predetermined time has elapsed.

In FIG. 3(c), the result of correlating the preambles of the networks A and B are not detected. However, this is an ideal state. Although the received signal do not correspond to the preambles of the networks A and B, a partial small signal may be detected. In this case, it may be determined whether the specific channel is available or not using the methods described with reference to the step S12 of FIG. 1.

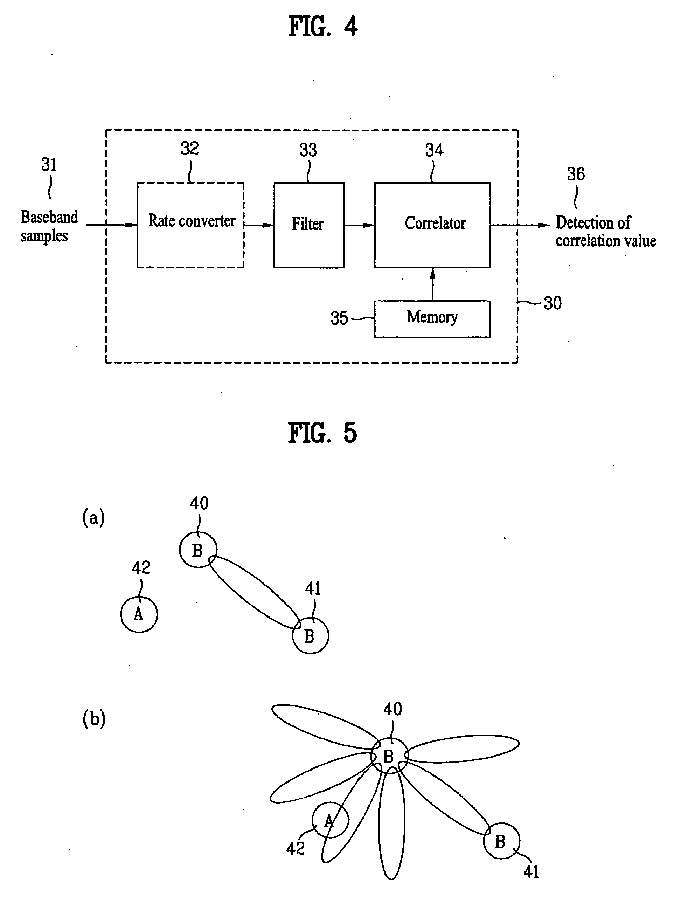

FIG. 4 is a block diagram showing a detecting device according to an embodiment of the present invention.

Referring to FIG. 4, the detecting device 30 includes a rate converter 32, a filter 33, a correlator 34 and a memory 35. The detecting device 30 may be included in the device which checks whether the specific channel is available or not or may be configured by a separate device.

The device or the detecting device 30 generates baseband signals or baseband samples 31 using the received signals. The rate converter 32 receives the generated baseband samples 31 and changes the sampling rates of the samples. Since correlation cannot be performed using signals having different sampling rates, the sampling rates of the signals received via the rate converter 32 are changed to correspond to the sampling rate of a reception-side device.

The rate converter 32 may be selectively included if the sampling rate used in a signal transmission side and the sampling rate used in a signal reception side are different from each other. If the sampling rate used in the signal transmission side and the sampling rate used in the signal reception side are equal to each other, the rate converter 32 may not be included. Alternatively, if the received signals can be changed so as to be correlated by the reception-side device, the rate converter 32 may not be included.

The filter 33 receives the signals of which the sampling rates are adjusted and eliminates a signal in a frequency region which is not required for correlation. Since the unnecessary signal is eliminated by the filter 33, it is possible to obtain a more accurate correlation result.

The correlator 34 receives the filtered signals and correlates the filtered signal and the preamble information known by the device which receives the signals. It is checked whether how many portions of the received signals and the preamble information known by the device which receives the signals are matched to each other, using the correlator 34. In an ideal case, only when the received signals and the preamble information known by the device which receives the signals are matched to each other, the correlation value is detected. However, in a non-ideal case, even when the received signals and the preamble information known by the device which receives the signals are matched to each other, a signal similar to noise may be detected.

In the memory 35, the preamble information for distinguishing between the networks used in the correlator 34 may be stored. The device checks whether the received signals are equal to the preamble information stored in the memory. If plural pieces of preamble information are stored, all the plural pieces of preamble information may be sequentially or simultaneously correlated and portions thereof may be selected and may be sequentially or simultaneously correlated.

If the correlation value is detected by the correlator 34, it is determined that the network corresponding to the preamble which generates the detected correlation value 36 exists and thus it is determined that the specific channel is not available. If the correlator is not ideal, a plurality of correlation values may be detected with respect to the plurality of stored preambles. In this case, it is determined that the network corresponding to the preamble which generates a maximum value among the plurality of detected correlation values exists and thus it is determined that the specific channel is not available. The predetermined threshold may be used for checking whether the detected correlation value 36 is a signal indicating that the received signal is matched to any preamble or noise. Only when the detected correlation value exceeds the predetermined threshold, it is determined that the received signal is matched to any preamble and thus it is determined that the specific channel is not available. That is, if the detected correlation value is smaller than the predetermined threshold, it is determined that the received signal is noise and thus it is determined that the specific channel is available.

FIG. 5 is a view illustrating a method for efficiently detecting a different type of network according to an embodiment of the present invention.

An embodiment which can be used when some networks transmit only a signal having high directivity will be described with reference to FIG. 5.

FIGs. 5(a) and 5(b) show a case where two devices 40 and 41 included in the network B perform the communication and a device 42 included in the network A uses the specific channel and determines whether the specific channel is available or not.

The device 42 included in the network A may determine whether the specific channel is available or not using the above-described method for determining whether the channel is available or not. The device included in the network A should receive the signal from any one of the two devices 40 and 41 included in the network B in order to use the method for determining whether the channel is available or not. Preferably, the device included in the network A should receive the preamble representing the network B from any one of the two devices 40 and 41 included in the network B.

However, as shown in FIG. 5(a), if the directivities of the signals transmitted by the two devices 40 and 41 included in the network B are high, a probability that the device 42 included in the network A can receive the preamble representing the network B is significantly reduced.

Accordingly, in the present embodiment, as shown in

FIG. 5(b), the device included in the network B for transmitting only the signal having the high directivity periodically transmits the signal corresponding to the preamble information with respect to at least one direction. Preferably, the device included in the network B for transmitting only the signal having the high directivity transmits the preamble signal in all directions. For example, if the device 40 included in the network B transmits the signal once and devices included in a 30-degree region can receive that signal, the device 40 included in the network B can transmit the preamble signal a total of 12 times in all direction.

The device included in the network for transmitting only the signal having the high directivity periodically transmits the preamble signal so as to cover all directions. Accordingly, the device, which determines whether the specific channel is available or not, can receive the preamble from the device included in the network for transmitting only the signal having the high directivity. Accordingly, the device can correlate the preamble received by the above-described method and the preamble information known by the device and determine whether the specific channel is available or not.

As described above, if the channel bands or the channel bandwidths of the transmission side and the reception side are different from each other, it is difficult to correlate the preamble signal transmitted from the transmission side and the preamble information known by the reception side. Thus, an accurate result may not be obtained.

In this case, as described above, the detecting device of the reception side includes the rate converter and adjusts the sampling rates of the signals of the transmission side to the sampling rates of the reception side using the rate converter. In addition, when the signals received by the reception side are sampled, the number of times of sampling may be adjusted and sampling may be performed. Alternatively, the signals received by the reception side may be sampled according to the sampling rate of the reception side and an interpolation may be performed with respect to the sampled values, thereby acquiring additional sampled values. Alternatively, the signals received by the reception side may be sampled according to the sampling rate of the reception side and some of sampled values may be selected, thereby using only the selected sampled values.

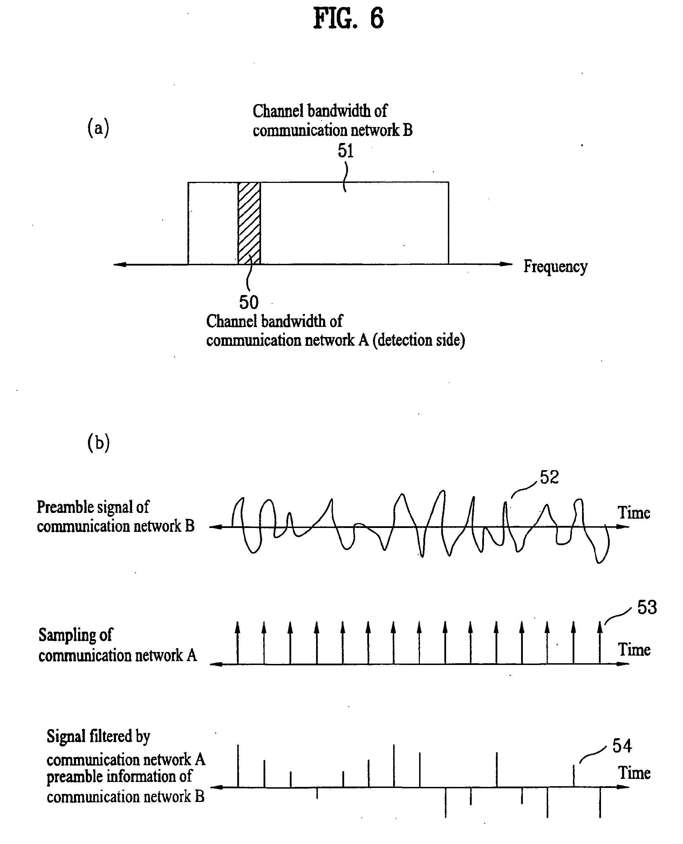

FIG. 6 is a view illustrating a method for detecting a different type of network according to an embodiment of the present invention.

FIG. 6(a) shows the channel bandwidth 50 of the device of the network A and the channel bandwidth 51 of the device of the network B. In addition, FIG. 6(a) shows a case where the channel bandwidth 50 of the device of the network A and the channel bandwidth 51 of the device of the network B are different from each other and the device of the network A receives the signal via the above-described channel.

In more detail, FIG. 6(a) shows the case where the channel frequency bandwidth 51 used in the device of the network B of the transmission side of the preamble signal is larger than the channel frequency bandwidth 50 used in the reception-side device, that is, the device of the network A which receives and correlates the preamble signal. If the channel frequency bandwidth 51 of the transmission-side device is larger than the channel frequency bandwidth 50 used in the reception-side device, the reception-side channel frequency bandwidth 50 to be detected is narrow and thus the frequency band of the transmission-side signal cannot be obtained.

In other words, if the frequency band of the device is relatively wide, it may be indicated that the sampling rate of the signal is high. That is, it is indicated that a period when the transmission-side device samples the generated preamble signal is shorter than a period when the reception-side device receives and samples that signal.

If the sampling period used in the reception-side device is larger and the sampled signal is a signal 52 having a waveform shown at the upper side of FIG. 6(b), the detection-side device which receives the signal 52 cannot recognize the waveform without an additional operation using the rate converter. For example, if the signal 52 which is received in a sampling period 53 used in the detection-side device, which is shown in the middle of FIG. 6(b), is sampled, a signal 54 having a waveform shown at a lower side of FIG. 6(b) can be detected.

Accordingly, in the present embodiment, the device stores a signal having a pattern obtained by sampling or filtering an original preamble signal of a network by the reception-side (detection-side) device as the preamble information of the network, rather than storing the preamble of coexistable network in the memory without conversion. For example, even when the original preamble signal of the network is the signal 52 having the waveform shown at the upper side of FIG. 6(b), the signal 54 having the waveform generated by the sampling or filtering operation performed by the detection-side device is stored as the preamble information of the network, instead of storing the waveform of the signal 52 as the preamble information of the network without conversion.

By configuring the preamble information of the network, the correlation process for checking or determining whether the channel is available or not between systems in which the channel frequency bands or the sampling rates are different from each other can be simply and efficiently performed.

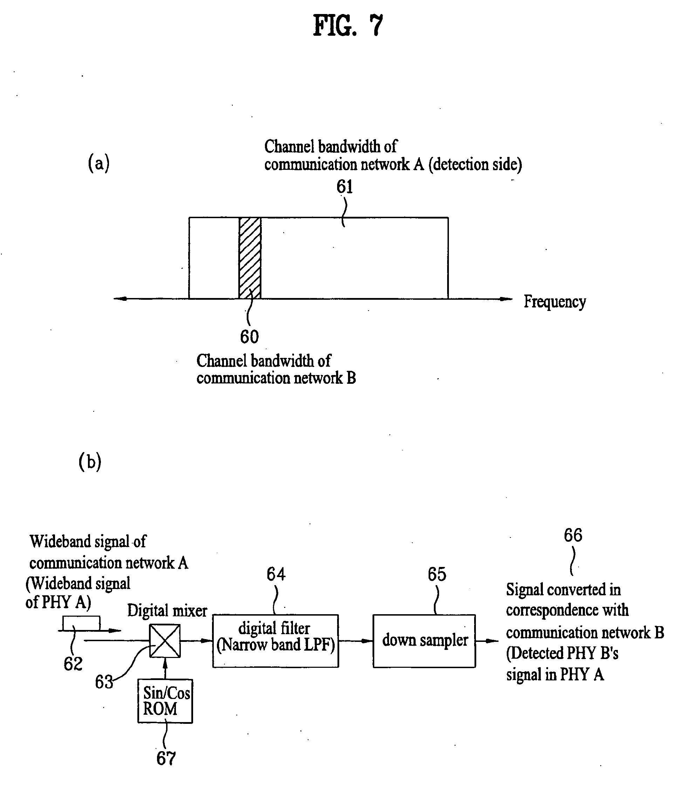

FIG. 7 is a view illustrating a method for detecting a different type of network according to an embodiment of the present invention.

FIG. 7(a) shows the channel bandwidth 61 of the device of the network A and the channel bandwidth 60 of the device of the network B. In addition, FIG. 7(a) shows a case where the channel bandwidth 61 of the device of the network A and the channel bandwidth 60 of the device of the network B are different from each other and the device of the network A receives the signal via the channel. That is, when the device of the network A receives the signal in order to check whether the specific channel is available or not, the signal becomes the preamble signal of the network B.

In this case, FIG. 7(a) shows a case where the channel frequency bandwidth 61 used in the reception-side device is larger than the channel frequency bandwidth 60 used in the transmission-side device. If the channel frequency bandwidth 61 used in the reception-side device is larger than the channel frequency bandwidth 60 used in the transmission-side device, the reception-side channel frequency bandwidth 60 to be detected is wide and the accuracy of the result of performing the correlation may deteriorate due to noise.

In other words, if the frequency band of the device is relatively wide, it may be indicated that the sampling rate of the signal is high. That is, it is indicated that a period when the transmission-side device samples the generated preamble signal is larger than a period when the reception-side device receives and samples that signal. As described above, since the reception side may include noise in addition to the necessary information due to frequent sampling, it is difficult to accurately receive the preamble. Thus, the accuracy of the correlation value may deteriorate.

By including an analog filer, the method for filtering the received signal may be used. However, in this case, a plurality of analog filters may be required for a plurality of expected channel bandwidths. Accordingly, it is disadvantageous in view of cost and volume.

Accordingly, in the present embodiment, if the reception-side channel bandwidth is larger than the transmission-side channel bandwidth, a method using a digital filter, a digital mixer and a down sampler is suggested. In this case, the configuration of the reception side is shown in FIG. 7(b).

Referring to FIG. 7(b), the reception side may include a digital mixer 63, a digital filter 64 and/or a down sampler 65. Here, the digital mixer 63 receives a signal in a wide band corresponding to the reception-side channel frequency band and converts the central frequency of the received signal. That is, since the channel bandwidths of the signal transmitted by the transmission side and the signal received by the reception side are different from each other, a process of matching the central frequencies of the two signals is required.

The digital filter 64 receives the signal of which the central frequency is converted in the wide band and converts it into the frequency bandwidth corresponding to the transmission-side frequency band. For example, in FIG. 7(a), since the signal having the channel bandwidth of the network B is received in the channel bandwidth of the network A, the signal in the unnecessary band is eliminated from the received signal using the filter corresponding to the channel bandwidth of the network B. That is, the received signal is filtered using the filter corresponding to the channel bandwidth of the network B.

The down sampler 65 performs sampling at a low sampling rate, instead of at the original sampling rate of the reception side. As described above, if the channel frequency bandwidth is large, the sampling rate is high, that is, the sampling period is short. Accordingly, the reception side performs sampling at a low sampling rate and generates the signal corresponding to the transmission-side channel bandwidth.

Both the digital filter 64 and the down sampler 65 may be included, but, if necessary, any one of the digital filter 64 and the down sampler 65 may be included.

Hereinafter, a method for generating the preamble information used for correlation will be described using the above components 63 to 65. The device of the network A which determines whether the specific channel is available or not receives the signal via the channel. This signal may become the preamble signal of the network B which can currently use the channel. The reception side or the detection side which receives the preamble signal of the network B receives the signal in correspondence with the frequency bandwidth of the network A. In this case, since the transmission-side channel bandwidth and the reception side channel bandwidth are different from each other, a process of adjusting the channel bandwidth may be performed.

The central frequency of the signal 62 which is received in correspondence with the frequency bandwidth of the network A is converted by the digital mixer 63. The signal of which the central frequency is converted is filtered in correspondence with the frequency bandwidth of the network B by the digital filter 64. Additionally or alternatively, the filtered signal is selectively sampled by the down sampler 65. The resultant signal becomes the signal which is converted in correspondence with the frequency bandwidth of the network B. The converted signal may become the preamble information which is available by the detection-side device. If the correlation is performed using the signal generated by the above-described method, it is possible to acquire a more accurate correlation result value.

Some networks may have a plurality of channels. That is, in a specific channel, communication may be performed via at least three channels each having a channel bandwidth smaller than that of the specific channel.

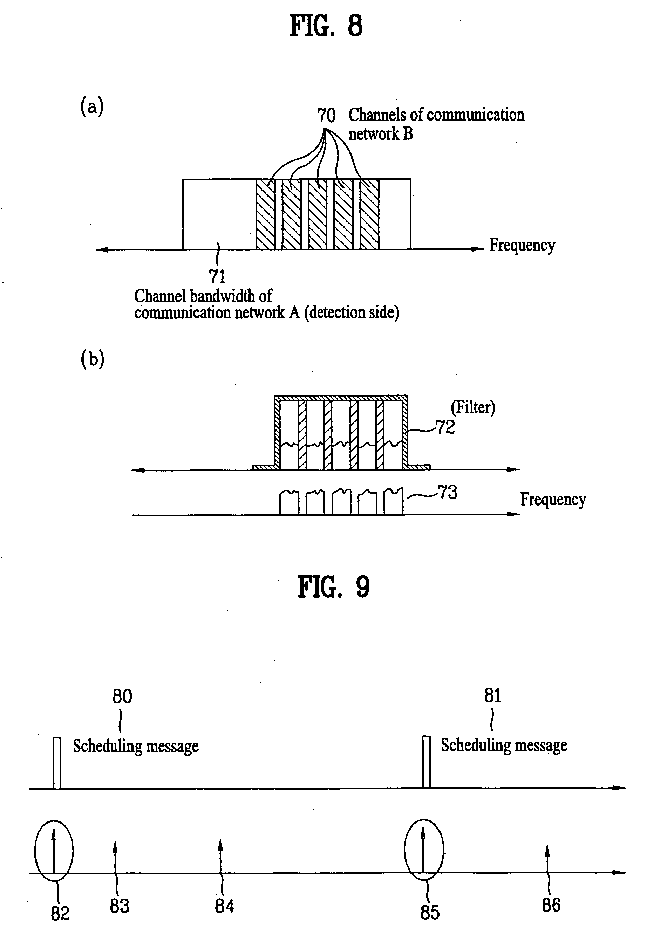

FIG. 8 is a view illustrating a method for detecting a plurality of channels included in a specific channel bandwidth according to an embodiment of the present invention.

FIG. 8(a) shows a channel bandwidth 71 of the detection-side network A which receives the signal in the specific channel and a plurality of channels 70 of the network B which can use a portion or the whole of the specific channel, that is, transmit the signal.

That is, the device of the network A which determines whether the specific channel is available or not receives the signal via the specific channel. In this case, the plurality of narrowband channels 70 may be included in the above-described channel range and at least one of the plurality of narrowband channels 70 may be used, due to the characteristics of the network B. The device of the detection-side network B can accurately check whether the specific channel is available or not when all the plurality of narrowband channels 70 are detected.

Now, methods for detecting the plurality of narrowband channels will be described. First, as a first method, the plurality of narrowband channels are sequentially correlated and detected. As shown in FIG. 8(a), for example, if five narrowband channels are included in the network B, the five narrowband channels are sequentially detected one by one and/or it is determined whether the channel is available or not.

At this time, the channels may be detected and/or it may be checked whether the channel is available or not, using the method which can be used when the channel bandwidth of the detection-side device is larger than that of the transmission-side device, that is, which is described with reference to FIG. 7.

As a second method for detecting the plurality of narrowband channels, the plurality of narrowband channels are simultaneously correlated and detected. In order to simultaneously check the plurality of channels, the number of detecting devices should correspond to the number of the plurality of channels. If the plurality of detecting devices are included and the channels are simultaneously checked, it is possible to reduce the checking time compared with the first method.

Even in this case, the channels may be detected and/or it may be checked whether the channel is available or not, using the method which can be used when the channel bandwidth of the detection-side device is larger than that of the transmission-side device, that is, which is described with reference to FIG. 7.

As a third method for detecting the plurality of narrowband channels, if it is assumed that all the channels are used, that is, all the preamble signals of the channels are received, the preamble pattern at that time are stored and used as the preamble information used for correlation at the reception side. In this case, when it is assumed that a filter which can include the plurality of narrowband channels is configured and all the preamble signals of the channels are received, it is possible to generate the preamble pattern.

FIG. 8(b) shows the configuration of an exemplary filter 72 which can include all the plurality of narrowband channels at the upper side thereof and shows a preamble pattern 73 when it is assumed that all the preamble signals of the channels generated using the filter at the lower side thereof. The reception-side or detection-side device performs the correlation using the preamble pattern 73 as the preamble information when it is assumed that all the preamble signals of the channels are received, without checking the plurality of narrowband channels. In this case, when the preamble signals are received via all the narrowband channels, it is possible to obtain a most accurate correlation result.

Hereinafter, a method for detecting a different type of network using a preamble transmission period according to another embodiment of the present invention will be described.

The device of a network receives a signal via a specific channel in order to check whether the specific channel is available or not. Then, the received signal is correlated with the preamble information of a plurality of networks stored in the device. Then, if it is determined that the preamble of a specific network is matched to the received signal as the correlation result, it is determined that the specific channel is being used by the specific network.

At this time, if the transmission-side or reception-side device is located at the boundary of communication cells such that the intensity of the received signal weakens or the level of noise is increased, a probability that the result of performing the correlation at the reception side is inaccurate is increased. This is because the level of the received signal is low or the level of noise is high.

In this case, in the present embodiment, when the signal is received via the specific channel, not only one signal is received, that is, at least three signals are received. In addition, it is checked whether the received signals correspond to the preamble information of the specific network, using the correlation between the received signals and the preamble information known by the reception-side device.

In particular, at least two signals corresponding to the preamble information of the specific network are detected using the above-described process. A period of at least two signals corresponding to the preamble information of the specific network is measured. If the reception-side device checks that the specific network exists using the preamble correlation method, the reception-side device can check whether the specific network exists again using the period of the signals.

That is, the reception-side device receives at least two signals, obtains a correlation value between the signals, and measures the period of the detected signals if the number of detected signals is at least two. Then, the reception-side device compares the measured period with period information for distinguishing between the networks checked using the correlation and checks whether the specific network exists again. Here, a period in which the preamble signal is transmitted by the network or a period in which a scheduling message is broadcasted by the network may be used as the period information for distinguishing between the networks.

FIG. 9 is a view showing a method for detecting a different type of network using a preamble transmission period according to an embodiment of the present invention.

At the upper side of FIG. 9, a period in which scheduling messages 80 and 81 of the specific network are transmitted or broadcasted when the scheduling message is used as an example of the period information of the specific network is shown. At the lower side of FIG. 9, result values 82 to 86 obtained by receiving the plurality of signals at the reception-side device and correlating the plurality of received signals using the preamble information stored in the reception-side device are shown.

The reception-side device may check that the network corresponding to the preamble information which generates the correlation values 82 and 85 corresponding to a maximum value of the detected correlation values 82 to 86 exists in the specific channel. In addition, as described above, if the number of correlation values 82 and 85 corresponding to the maximum value of the detected correlation values 82 to 86 is at least two and the period of the signals corresponding to the correlation values 82 and 85 is matched to the period in which the scheduling message is transmitted by the specific network, it is determined that the network exists in the specific channel. That is, it is determined that the specific channel is not available.

In an environment in which one or more networks can coexist, a device which starts communication checks whether a specific frequency band to be used is used by another network or not. An example of a method for checking whether the specific frequency band to be used is used by another network or not includes a method for using a signal received in the specific frequency band to be used.

In other words, if the device starts the communication, the device periodically transmits the signal in order to inform that the specific frequency band is being used by the device. At this time, in the method for transmitting the signal, it is preferable that the signal is transmitted such that all devices included in a predetermined region can receive the signal in a broadcast form, without specifying a specific reception side. When the device which uses the specific frequency band periodically transmits the signal via the specific frequency band, the device which wants to use a portion or the whole of the specific frequency band receives the transmitted signal and checks whether the specific frequency band is available or not.

As described above, the signal which is used for checking whether the specific frequency band is available or not by the transmission/reception of the signal may become the preamble signal for distinguishing the specific network, or a signal having a predetermined pattern, that is, a signal to be detected, may be separately configured from the preamble signal and may be transmitted together with the preamble signal.

In order to check whether the specific frequency band is available or not by the transmission/reception of the preamble signal and/or the signal to be detected, it is preferable that the transmission/reception of the signal including the preamble signal and/or the signal to be detected is appropriately performed. However, in some cases, if a communication device which uses the specific frequency band broadcasts the preamble signal and/or the signal to be detected but a communication device which wants to use the specific frequency band does not receive the broadcast signal, the same frequency band may be simultaneously used by different networks and communication may be interrupted.

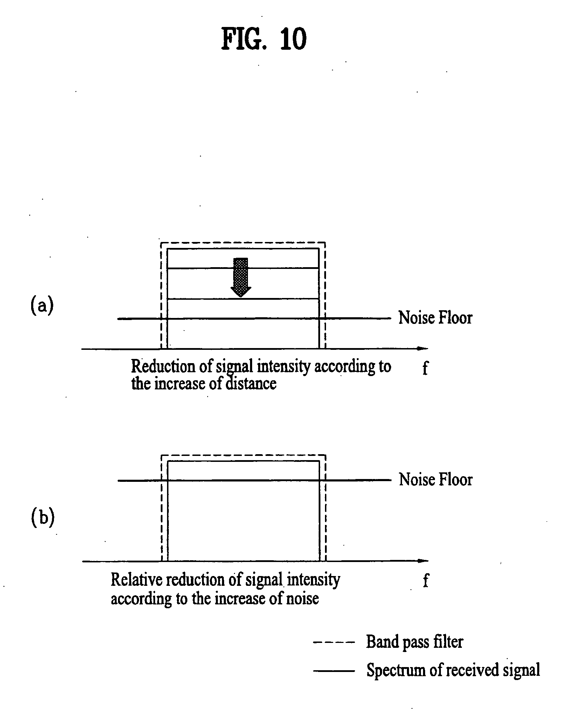

FIG. 10 is a view illustrating a case where the intensity of a signal is reduced.

FIG. 10(a) shows a case where the intensity of the signal is reduced as a distance is increased, as an example of the case where the intensity of the signal is reduced.

As described above, it is preferable that the communication device which uses the specific frequency band may inform that the specific frequency band is being used by the communication device in order to prevent the communication interruption and a device belonging to a network different from that of the communication device may receive the signal of the device which already uses the specific frequency band when using the specific frequency channel.

However, as shown in FIG. 10(a), although the device which already uses the specific frequency band transmits the signal having a predetermined intensity or more, if the transmitted signal is transmitted to a remote device, the intensity of the signal received by the remote device is reduced as the distance therebetween is increased.

If the distance between the transmission device and the reception device is large, although the transmission device transmits a specific signal, for example, a signal to be detected with an intensity which can be recognized as the signal to be detected, to the reception device, the reception device may not receive the signal to be detected. Even when the reception device receives the signal to be detected, the reception device does not recognize the received signal as the signal to be detected because the intensity of the signal is low. Thus, an error in which the received signal is recognized as noise may occur.

FIG. 10(b) shows a case where the intensity of the signal is relatively reduced as noise is increased as another example of the case where the intensity of the signal is reduced.

As shown in FIG. 10(b), although the device which already uses the specific frequency channel transmits the signal having a predetermined intensity or more, that is, an intensity which can be recognized as the specific signal by the reception device, for example, the signal to be detected, if the intensity of noise which exists in a communication environment is increased, the received signal is not distinguished from noise. Accordingly, the reception device is unlikely to distinguish between the signal to be detected and the noise signal. Thus, similar to FIG. 10(a), an error in which the received signal is recognized as noise may occur.

Accordingly, hereinafter, a method for reducing a probability that an error occurs as shown in FIG. 10 will be described.

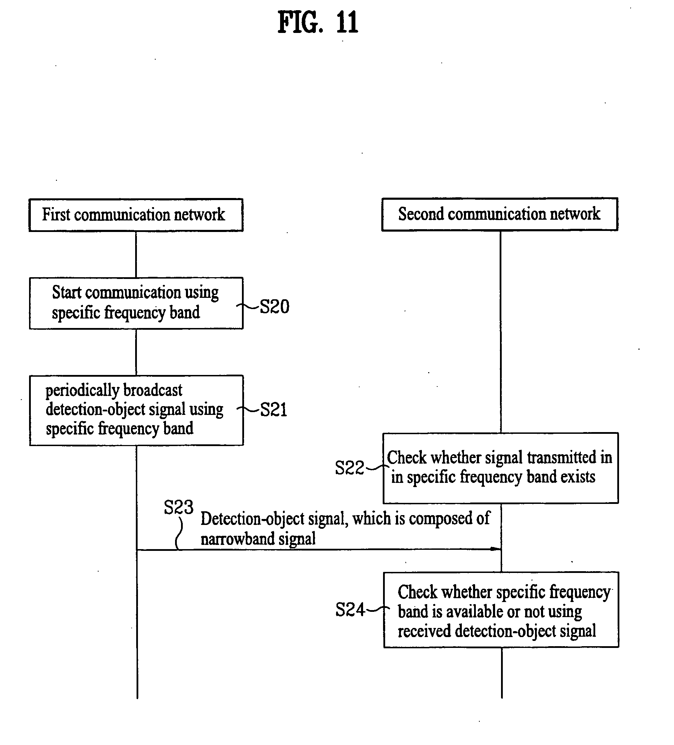

FIG. 11 is a flowchart illustrating a method for expanding a detectable range according to an embodiment of the present invention.

Before describing the present embodiment, it is assumed that a first network and a second network exist, the two networks perform communication via different protocols and the communication between the two networks is possible in a specific case. In other words, if the first network and the second network use a specific frequency band, the signals transmitted by the first network and the second network may be recognized as noise by each other, respectively. Accordingly, the communication may be interrupted due to the signals transmitted by each other.

First, in a step S20, the communication using the specific frequency band is started in the first network. At this time, it is assumed that there is no network which uses the specific frequency band before the first network uses the specific frequency band. If the communication using the specific frequency band is started in the first network, the devices included in the first network can transmit/receive data using the specific frequency band according to a predetermined communication protocol.

In a step S21, among the devices included in the first network, a device which schedules a radio resource or a device which uses the specific frequency band transmits a signal informing that the specific frequency band is being used by the first network. At this time, it is preferable that the signal is transmitted in the broadcast form as described above.

The signal informing that the specific frequency band is being used by the first network becomes the preamble signal which can recognize the networks. Alternatively, the signal to be detected may be transmitted independent of the preamble signal. Hereinafter, for convenience of description, the signal informing that the specific frequency band is being used by the first network is collectively called the signal to be detected, regardless of the preamble signal or the signal to be detected.

In a step S22, a device included in the second network checks whether the network which uses the specific frequency band exists before the communication is started, in order to use the specific frequency band. As described above, in order to check whether the network which uses the specific frequency band exists, it is checked whether the signal received using the specific frequency band is present.

If a signal for the specific frequency band is present in a step 23, it is checked whether the specific frequency band is available or not in a step S24. In other words, it may be determined which network uses the specific frequency band using the signal for the specific frequency band or it may be determined which network uses the specific frequency band by receiving the signal for the specific frequency band and receiving another signal for distinguishing between the networks, for example, the preamble signal. In addition, the characteristics of the channel corresponding to the specific frequency band can be checked using the preamble signal.

If the network which uses the specific frequency band is equal to the network to which the device belongs, that is, the second network in the embodiment of FIG. 11, in the above-described checked result, it is determined that the specific frequency band is available. If the network which uses the specific frequency band is equal to the network to which the device does not belong, that is, the first network, in the embodiment of FIG. 11 in the above-described checked result, the communication is started after a predetermined time has elapsed or it is checked whether communication using another specific frequency band is possible or not.

In the present embodiment, the signal to be detected, which is used in the step S21 and/or S22, is composed of a narrowband signal. This is because the intensity of the signal can be increased when the intensity of the signal to be detected is reduced or is relatively reduced compared with the noise signal.

The amount of power which is available for transmitting the signal by the device is restricted. In addition, the power used for communication is defined as a product of a frequency bandwidth and power density. Here, the power density indicates the power intensity of the transmitted signal per unit frequency. Accordingly, in order to increase the power intensity of the signal while using the same power, a method for reducing the frequency bandwidth according to the present embodiment is preferably used. In other words, if the frequency bandwidth is reduced and the signal composed of the narrowband signal is transmitted, the intensity of the transmitted signal may be increased.

If the frequency bands used in the first network and the second network are partially matched to each other, the device included in the second network can receive only the signal in the partial band although the signal to be detected is transmitted using the whole band which can be used in the first network. Accordingly, in this case, in particular, although the same power is used when the signal to be detected is transmitted in a state in which the frequency band is restricted to an audible frequency of the second network, the signal having a relatively large intensity can be transmitted.

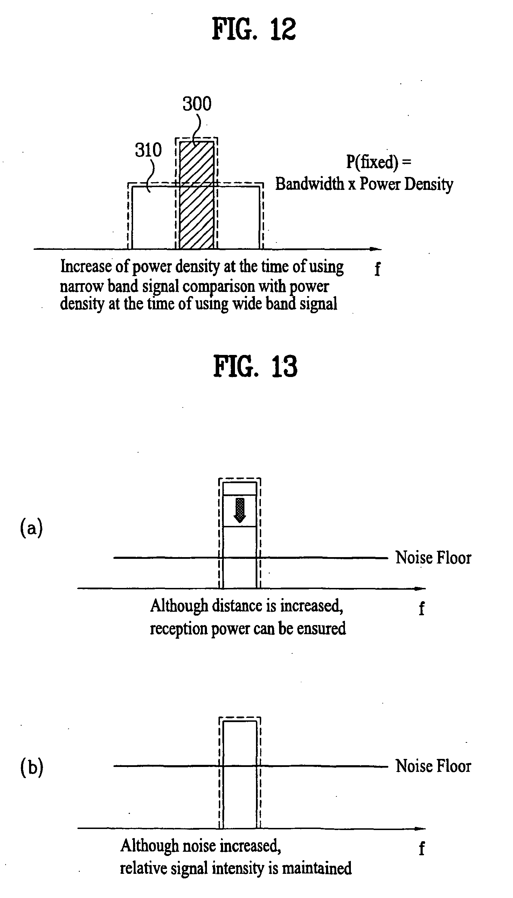

FIG. 12 is a view illustrating a method for configuring a signal to be detected by a narrowband signal according to an embodiment of the present invention.

In FIG. 12, a hatched portion 300 indicates a frequency-to-power-density function of the signal to be detected, which is composed of the narrowband signal. In FIG. 12, a non-hatched portion 310 indicates a frequency-to-power-density function of the signal to be detected, which is composed of the wideband signal. The area of the frequency-to-power-density function of the signal to be detected, which is composed of the narrowband signal, and the area of the frequency-to-power-density function of the signal to be detected, which is composed of the wideband signal, are equal to each other. This indicates that the signals to be detected use the same power.

Referring to FIG. 12, it can be seen that the signal to be detected, which is composed of the narrowband signal, may have use power higher than that of the signal to be detected, which is composed of the wideband signal. In other words, if the signal to be detected, which is composed of the narrowband signal, is used, it is possible to transmit the signal to be detected, of which the power density is relatively increased if the same power is used.

FIG. 13 is a view illustrating the effect according to an embodiment of the present invention.

FIG. 13(a) corresponds to FIG. 10(a). While FIG. 10 (a) shows the case where the signal to be detected is composed of the wideband signal and has a relatively low power density, FIG. 13(b) shows the case where the signal to be detected, which is composed of the narrowband signal, is used, as described with reference to FIG. 12.

Referring to FIG. 13(a), although the intensity of the signal is reduced as the distance is increased, since the signal to be detected has power higher than that of the noise signal, the reception side can distinguish the signal to be detected from the noise signal. In other words, since the signal to be detected, in which the intensity of the signal transmitted initially is higher than that of the signal to be detected, which is used in FIG. 10(a), is used by using the narrowband signal, the intensity of the signal can be maintained at a predetermined level or more although the intensity of the signal is reduced as the distance is increased. Thus, the reception-side device can recognize it as the signal to be detected.

FIG. 13(b) corresponds to FIG. 10(b). While FIG. 10(b) shows the case where the signal to be detected is composed of the wideband signal and has a relatively low power density, FIG. 13(b) shows the case where the signal to be detected, which is composed of the narrowband signal, is used, as described with reference to FIG. 12, similar to FIG. 13 (a).

Referring to FIG. 13(b), although the intensity of the noise signal received in the communication environment is increased, since the signal to be detected has a power density relatively larger than that of the noise signal, the reception side can distinguish the signal to be detected from the noise signal. In other words, similar to FIG. 13(a), since the signal to be detected, in which the intensity of the signal transmitted initially is higher than that of the signal to be detected, which is used in FIG. 10(b), is used by using the narrowband signal, the signal to be detected, which has an intensity relatively higher than that of the noise signal, can be received although the intensity of the noise signal is increased like FIG. 10(b). Thus, the reception-side device can recognize it as the signal to be detected.

Hereinafter, an example of the method for configuring the narrowband signal will be described.

An example of the method for configuring the narrowband signal includes a method for configuring a signal by a pattern in which the same data bit is repeated. For example, if a data bit pattern composed of the wideband signal is "10001011001110...", the bits are repeatedly configured so as to generate the signal to be detected. In the data bit pattern composed of repeating the same data bit, if the signal to be detected, which is composed of the narrowband signal, is generated by repeating the same data bit from the data bit, which is started in the above-described example, four times, the generated signal to be detected may become as follows:
"1111000000000000111100001111111100000000111111111111 0000".

At this time, if the preamble signal is used as the signal to be detected, it is preferable that the signal including the repetition pattern within a range satisfying the length of the predetermined preamble is used as the signal to be detected.

As described above, the narrowband signal configured by the above-described method may be transmitted as the preamble signal and may be transmitted in a state of being added to the preamble signal as the signal independent of the preamble signal. The signal to be detected, which is composed of the narrowband signal, may be transmitted using any frequency band in the whole frequency band which can be used. In this case, it is preferable that the signal to be detected is transmitted using an audible frequency of the network including the reception-side device or a frequency close to the audible frequency.

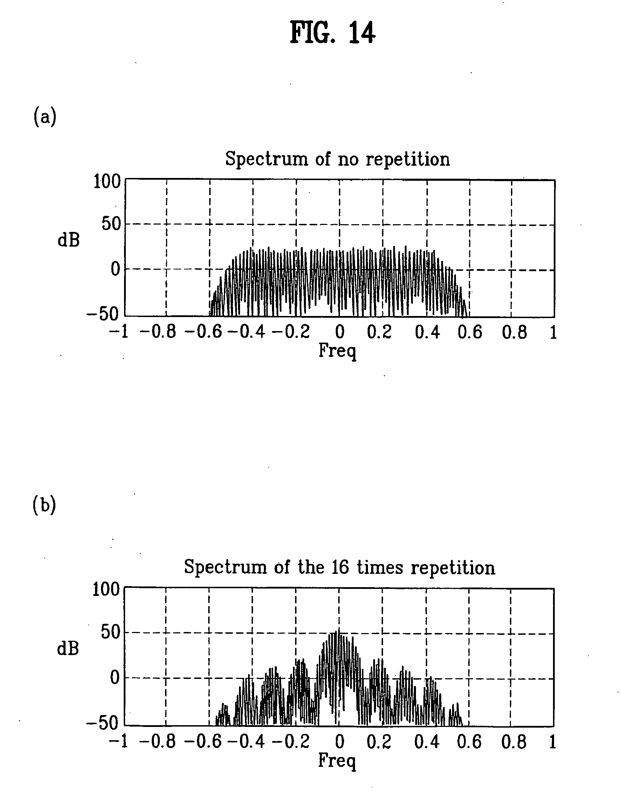

FIG. 14 is a view illustrating the effect obtained by using the signal to be detected, which is composed of the narrow signal, according to an embodiment of the present invention.

FIG. 14(a) shows a signal spectrum of the signal to be detected without using the repetition pattern. FIG. 14(b) shows a signal spectrum of the signal to be detected using the repetition pattern and more particular a signal spectrum of the signal to be detected using the repetition pattern in which one data bit is repeated 16 times. Compared with FIGs. 14(a) and 14(b), it can be seen that the narrowband signal can be configured by the repetition pattern and the intensity of the signal can be increased by using the narrowband signal.

FIG. 14(a) shows the signal spectrum in which the intensity of the signal is substantially uniform between - 0.6 and 0.6 on the basis of a center "0" in the signal to be detected without using the repetition pattern. However, FIG. 14(b) shows the signal spectrum in which the intensity of the signal has a maximum value between -0.1 to 0.1 on the basis of the center "0" and is reduced as being away from the center in the signal to be detected using the repetition pattern. Accordingly, if the reception-side device receives the signal to be detected using the repetition pattern, only the signal between the -0.1 to 0.1 based on the central frequency may be extracted and used as the signal to be detected.

It can be seen that the intensity of the signal is constantly maintained at about 20 dB in FIG. 14(a), but the intensity of the signal has a maximum value 50 dB at the central frequency in FIG. 14(b). That is, if the signal to be detected is configured so as to have the repetition pattern as described above, the narrowband signal is configured. Thus, although the same power is used, the intensity of the signal can be increased.

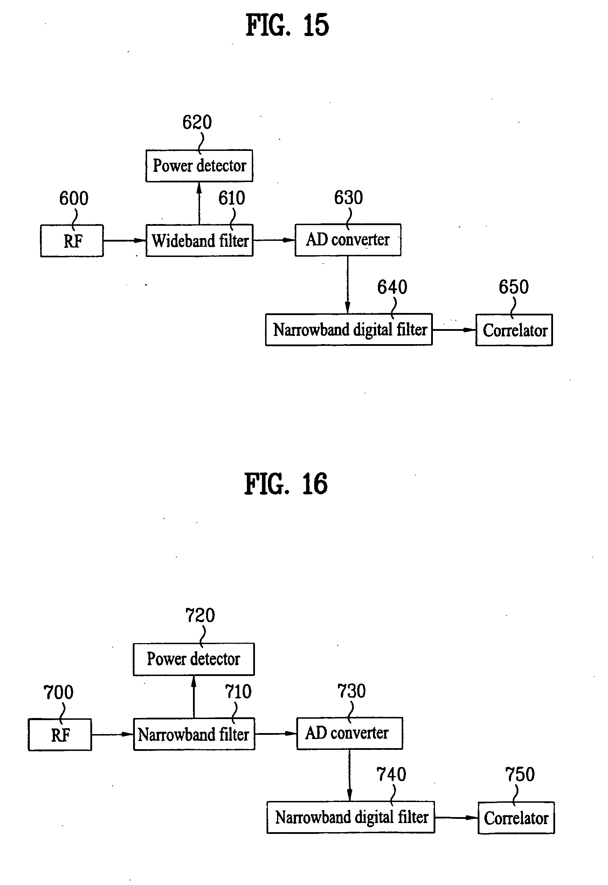

FIG. 15 is a block diagram showing the configuration of a detection side according to an embodiment of the present invention.

The reception-side device of FIG. 15 includes an RF module 600 for receiving a signal, a wideband filter 610 for extracting a signal having a relatively wide bandwidth, a power detector 620 for measuring the power of the signal, an AD converter 630 for converting an analog signal into a digital signal, a narrowband digital filter 640 for extracting a digital signal having a relatively narrow bandwidth, and a correlator 650 for correlating the received signal and a stored signal and extracting a correlation value.

An example of a method for detecting a signal to be detected by the reception-side device having the above-described configuration includes a method for filtering the received signal to be detected using the wideband filter 610 and checking whether a signal having an intensity, which can be recognized as the signal to be detected, is detected in the filtered signal using the power detector 620.

In another example of the method for detecting the signal to be detected, the signal may be detected in a digital domain unlike the above-described example in which the signal is detected in an analog domain. In other words, a digital signal in a desired band is extracted from the signal, which is converted into the digital signal via the AD converter 630, using the digital filter 640. A specific signal used at this time may be preamble information which is previously stored if the signal to be detected is the preamble signal and may be information about the signal to be detected if a specific data pattern is previously set as the signal to be detected. It may be determined whether the signal to be detected is detected by the correlation result, that is, whether a network which uses the specific frequency band exists. For example, if the correlation result value is larger than a predetermined threshold, it may be determined that the signal to be detected is received.

FIG. 16 is a block diagram showing the configuration of a detection side according to another embodiment of the present invention.

The reception-side device of FIG. 16 includes an RF module 700 for receiving a signal, a narrowband filter 710 for extracting a signal having a relatively narrow bandwidth, a power detector 720 for measuring the power of the signal, an AD converter 730 for converting an analog signal into a digital signal, a narrowband digital filter 740 for extracting a digital signal having a relatively narrow bandwidth, and a correlator 750 for correlating the received signal and a stored signal and extracting a correlation value. The reception-side device of FIG. 16 is different from that of FIG. 15 in that the narrowband filter 710 is included.

An example of a method for detecting a signal to be detected by the reception-side device having the above-described configuration includes a method for filtering the received signal to be detected using the narrowband filter 710 and checking whether a signal having an intensity, which can be recognized as the signal to be detected, is detected in the filtered signal using the power detector 720. However, in this case, it is preferable that the reception-side device knows information about the frequency band used for transmitting the signal to be detected. In other words, if the reception-side device knows the information about the frequency band in which the signal to be detected is transmitted, the reception-side device may extract a necessary signal in the specific frequency band using the narrowband filter. Then, the intensity of the extracted signal is detected so as to detect the signal.

In another example of the method for detecting the signal to be detected, the signal which is converted into a digital signal by the AD converter 730 is filtered by the digital filter 740 and is correlated by the correlator 750 so as to check whether the signal to be detected is detected, which is similar to the second method of the methods described with reference to FIG. 15.

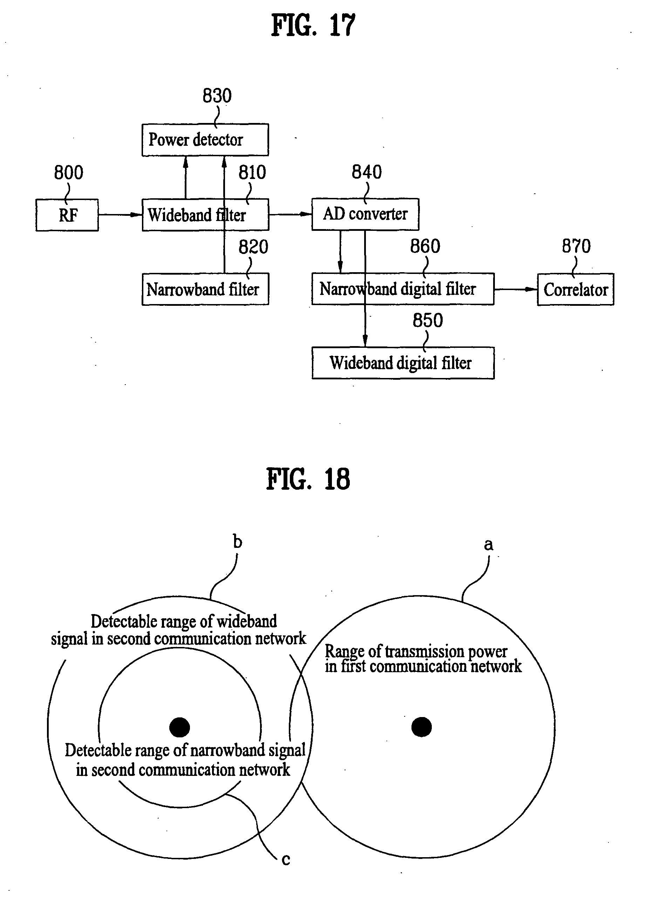

FIG. 17 is a block diagram showing the configuration of a detection side according to another embodiment of the present invention.

The reception-side device of FIG. 17 includes an RF module 800, a wideband filter 810, a narrowband filter 820, a power detector 830, an AD converter 840, a wideband digital filter 850, a narrowband digital filter 860 and a correlator 870. The reception-side device of FIG. 17 has the same components described with reference to FIGs. 15 and 16 and the description of the components thereof cites the description of FIGs. 15 and 16.

The reception-side device having the above-described configuration may use both the detecting method described with reference to FIGs. 15 and 16. In other words, the signal to be detected can be detected using the digital filters 850 and 860 and the analog filters 810 and 820 in the digital domain and the analog domain. That is, the localized power of the narrow band is measured by the narrowband filter 820 and the power detector 830 such that the signal to be detected is detected in the analog domain. In addition, after passing through the AD converter 840, the correlation value is extracted from the signal, which is digital-filtered by the digital filters 850 and 860, by the correlator such that the signal to be detected is detected in the digital domain.

FIG. 18 is a view illustrating a case where a range in which the signal to be detected can be detected is increased by the embodiment of the present invention.

In FIG. 18, a circle "a" denotes the intensity of the power for transmitting the signal to be detected in a first network, a circle "b" denotes a detectable range which the signal to be detected can be received by a second network when the signal to be detected, which is composed of the narrowband signal, is transmitted by the first network, and a circle "c" denotes a detectable range in which the signal to be detected can be received by the second network when the signal to be detected, which is composed of the wideband signal, is transmitted by the first network.

That is, it can be seen that, if the signal to be detected is transmitted with the transmission power denoted by the circle "a" of FIG. 18, that is, the same power, the range "b" in which the signal to be detected, which is composed of the narrowband signal, can be detected in the second network is larger than the range c in which the signal to be detected, which is composed of the narrowband signal, can be detected in the second network. In other words, it can be seen that, if the same transmission power is used, the range in which the signal to be detected, which is composed of the narrowband signal, can be received is increased.

As described above, the signal used for checking whether the specific frequency channel is available or not by the transmission/reception of the signal may be the preamble signal for identifying a specific communication network or a signal having a predetermined pattern, that is, a signal which is configured independent of the preamble signal and is transmitted together with the preamble signal. Alternatively, the signal may be common codes shared between one or more different types of networks, like the embodiment of the present invention. The common codes may be transmitted together with or instead of the preamble signal.

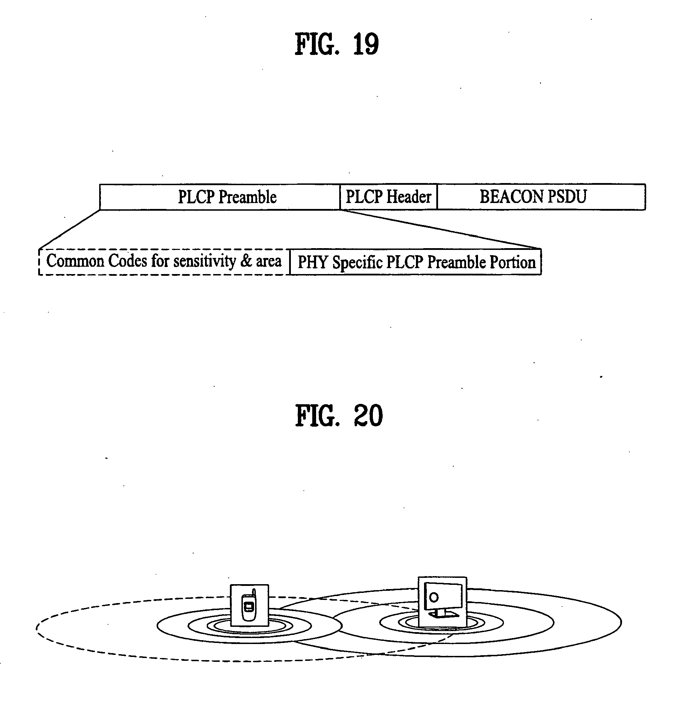

FIG. 19 is a view illustrating an example of a method for detecting a different type of network in an environment in which one or more different types of networks coexist, 1 for a better understanding of the present invention.

With regard to Fig. 19, a method for setting the common codes shared between one or more different type of networks and transmitting/receiving the common codes will be described in detail. Since the common codes are transmitted between the different types of networks in a predetermined form, the common codes are signals which can be received and detected by the reception side regardless of the type of the network, although the common codes are the different type of network signals. Accordingly, the device which receives the signals transmitted from the different type of network, that is, the common codes, it can be recognized that the network which performs the communication via the channel in the region exists.

A device which starts the network or a coordinator which performs resource scheduling in the network broadcasts the common codes and informs other devices of its own region.

The common codes may be included in a beacon and may be broadcasted together with the beacon. FIG. 19 shows an example in which the common codes suggested are added to the configuration of the beacon. If the common codes are transmitted together with the beacon, the common codes can be periodically transmitted in correspondence with a beacon period and can be transmitted to a beacon region, that is, a common region. Thus, the common region can be efficiently informed.

In particular, as shown in FIG. 19, if the common codes are inserted into the start portion of the beacon, the existing beacon can be used without alteration and thus the switching between the beacon in which the common codes are inserted and the beacon in which the common codes are not inserted can be freely realized. For the same effect, it is apparent that the common codes may be inserted into the end portion of the beacon.

Further, the common codes may include the level information of a service which is provided by the transmission-side network of the common codes. The service level information may be determined according to the types of the services including a streaming service and a file transfer service. For example, in consideration of the characteristics of the services which can be provided, the level is allocated according to the services and the common codes are transmitted in a state in which the common codes include the level information of the services which can be provided by the current network. In order to determine the service level, various elements such as a degree influenced by interference, a network communication region and so on may be considered.

The service level information may be determined according to the sensitivities of the services for the interference. For example, the streaming service of a high-quality video is significantly sensitive to the interference. That is, if an interruption signal is received due to the coexistence of the different types of networks, the influence is immediately displayed on a video screen and a problem occurs in service quality. In contrast, a service such as file transfer is not relatively influenced by the interference.

For example, if the interruption signal is received due to the coexistence of the different types of networks and data transmission is interrupted by the interruption signal, the data is retransmitted or a speed for transmitting the data is decreased. In this case, a data transfer rate is decreased, but the service quality in the file transfer does not deteriorate. Accordingly, a high level is allocated to the service which is sensitive to the interference and a low level is allocated to the service which is not relatively sensitive to the interference. In addition, it is apparent that the service level is determined in consideration of the sensitivity of each service for the interference.

The service level may be, for example, divided into three levels. In particular, in the case where the service level is determined according to the sensitivity of the service for the interference, the level is set to 1 if the sensitivity of the service for the interference is high, is set to 2 if the sensitivity of the service for the interference is medium, and is set to 3 if the sensitivity of the service for the interference is low. This is an example of determining the service level. The service level may be divided into more levels or less levels.

FIG. 20 is a view illustrating a case where beacon regions of one or more different types of networks are different from each other and serves a better understanding of the present invention.

Different types of networks may perform the communication with communication regions having different areas according to the characteristics of the networks. In other words, all the communication regions of the different types of networks are not equal to one another.

If the areas of the beacon regions of the different types of networks are different from each other, inequality occurs. That is, when the common codes are transmitted by the network having a narrow beacon region, only the device located in the narrow beacon region can receive the common codes. Accordingly, the device which searches for the channel outside the beacon region cannot detect the common codes. Thus, the device located outside the beacon region starts the different type of network and perform the communication. However, if the beacon region of the network is larger than the beacon region of the network which already performs the communication, the network region in which the communication is already performed may be intruded.

As described above, a device which is included in the network which already performs the communication and the different type of network which is newly started but is located at the boundary of the different types of networks may be interfered with the network which already performs the communication.

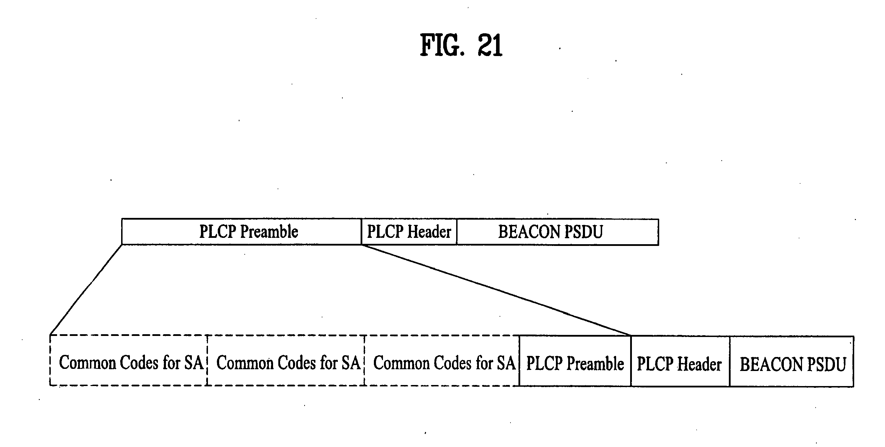

FIG. 21 is a view illustrating an example of a method for recognizing different types of coexistable networks in a case where beacon regions of one or more different types of networks are different from each other and serves a better understanding of the present invention.

Referring to FIG. 21, the common codes may be repeatedly transmitted at least one time. In particular, FIG. 5 shows the case where the common codes are transmitted three times. If the common codes are transmitted several times, a signal-to-noise ratio (SNR) is improved due to the repetition pattern of the common codes, compared with the case where the common codes are transmitted one time. Thus, the communication region is expanded.

In other words, in the network having the narrow beacon region, the common codes are repeatedly transmitted at least one time so as to be recognized in the different types of networks. The beacon region can be expanded by the codes transmitted with the repetition pattern and inequality can be solved.

Even in this case, the repeated common codes may be included in the beacon and may be broadcasted together with the beacon. FIG. 21 shows a situation in which the common codes suggested are repeatedly added to the configuration of the beacon. If the common codes are transmitted together with the beacon, the common codes can be periodically transmitted in correspondence with the beacon period and can be transmitted to the expanded beacon region, that is, the common region. Thus, the communication region can be efficiently informed.

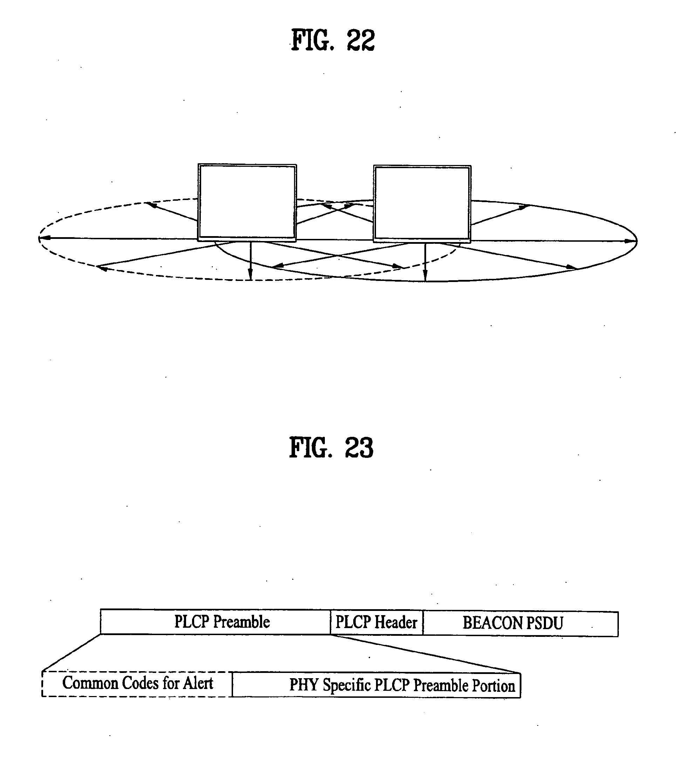

FIG. 22 is a view illustrating a case where one or more different types of networks coexist and serves a better understanding of the present invention.

As described above, it may be checked or detected whether the different type of network first performs the communication via the channel in the region in which the communication is desired to be performed, using the common codes or the common codes including the service level information. If the different type of network is detected, it is preferable that an empty channel is extracted from other channels by the same method and the network is started. However, since the number of channels which is available within a predetermined region is restricted, the different types of networks may simultaneously perform the communication via the same channel.

At this time, as described above, if the service level information which is determined according to the sensitivities of the services for the interference is included in the common codes and is transmitted, the network may coexist so as to suppress damage due to the interference in consideration of the service level information.

For example, despite of the existence of the network which performs the communication via the channel, if the communication is desired to be performed in a coexistence state, the service level is checked by the common codes. At this time, if it is assumed that the service level is set to 1, 2 and 3 according to the sensitivity is "high", "medium" and "low", the level 3, that is, a channel for providing the service having a lowest sensitivity to interference, is selected. If the channel for providing the service having the lowest sensitivity to interference is selected, the damage due to the interference can be minimized although the networks coexist.

Although the communication is performed in a state in which the different types of networks coexist in the same space and on the same channel, if the signal used for communication uses a millimeter wave, the communication can be performed without interference due to the characteristics of the millimeter wave, such as high directivity. However, although the millimeter wave is used, the interference may occur according to the position of the device. In particular, since the beacon is broadcasted in all directions, the gain due to the characteristics of the millimeter wave, such as, the high directivity, cannot be obtained.

If the communication is performed in the state in which the different types of networks coexist in the manner of minimizing the interruption due to the interference, the interference can be prevented to some degree. However, if the communication is performed in the state in which the different types of networks coexist on the same channel, the interference cannot be completely prevented from occurring.

FIG. 23 is a view illustrating an example of a method for informing that interference from a different type of network is received in a case where one or more different types of networks coexist and serves a better understanding of the present invention.

If two or more different types of networks having the same channel of the communication region coexist and a network receives an interference signal from another network, the network transmits information indicating that the interference is received from another network. At this time, since the information indicating that the interference occurs should be received and recognized by another network, the common codes are preferably used.

FIG. 23 shows an example of the configuration of a message which can be used when the common codes indicating that the interference is received from another network are transmitted and serves a better understanding of the present invention. Even in this case, as shown in FIG. 7, the common codes may be transmitted in a state of being included in the beacon. In the network having a narrow beacon region, the common codes indicating that the interference occurs may be repeatedly transmitted.

If the common codes indicating that the interference occurs can be transmitted when the interference between the coexistent networks occurs, it is preferable that the network which is started later so as to perform the communication checks whether the common codes indicating that the interference occurs are received from the network which is already started so as to perform the communication.

The network which receives the common codes indicating that the interference occurs reduces the occurred interference to a predetermined threshold or less and maintains the communication or changes the channel to another channel and continuously performs the communication. For example, it is assumed that the network which receives the common codes indicating that the interference occurs provides a file transfer service. In this case, in order to reduce the interference, the communication can be maintained at the current channel by a method for reducing a data rate, that is, a transfer rate, or a method for reducing transmission power or the communication can be maintained by changing the channel to an empty channel.

Hereinafter, an example of a method for configuring the common codes will be described. At this time, it is assumed that the common codes include the service level information and, if necessary, the information indicating that the interference occurs.

**Table 1**

| Sensitivity level | Code configuration | |
|---|---|---|
| High | A | A |
| Medium | A | -A |
| Low | -A | A |
| Alert | -A | -A |

Table 1 shows an example of a method for configuring the common codes. In Table 1, A denotes any code which can be detected and recognized regardless of the type of the network. For example, A may be a Backer code, a Golay code, and a Walsh code. In addition, -A denotes a code obtained by changing the phase of "A".

**Table 2**

| Sensitivity level | Code configuration | |
|---|---|---|
| High | A | A |
| Medium | A | B |
| Low | B | A |
| Alert | B | B |

Table 2 shows another example of a method for configuring the common codes. In Table 3, A denotes any code which can be detected and recognized regardless of the type of the network, similar to Table 1. For example, A may be a Backer code, a Golay code, and a Walsh code. In addition, B denotes a code orthogonal to A.

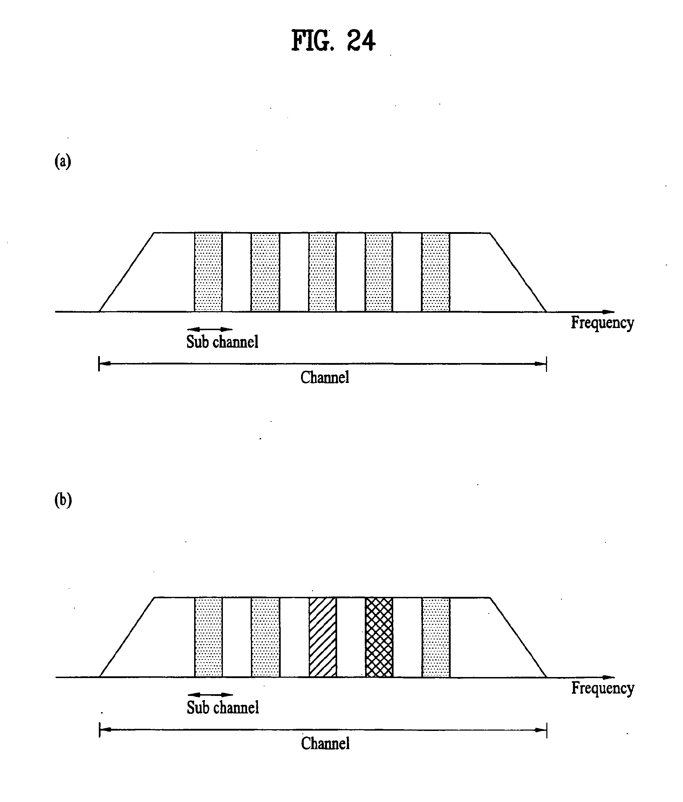

FIG. 24 is a view illustrating an example of a method for transmitting beacons of networks in a case where one or more different types of networks, which perform communication via one channel, coexist, and serves a better understanding the present invention.

As described above, if the different types of networks simultaneously perform the communication via the same channel, interference may occur. In this case, a probability that the interference occurs is increased in a signal which is transmitted in all directions, such as the beacon signal.

Accordingly, with regard to Fig. 24, prcocnt a method for setting at least one sub channel composed of a narrow band in one channel and using the sub channel when the beacons of the different types of networks are transmitted is suggested.

FIG. 24(a) shows an example of setting at least one sub channel composed of a narrow band in one channel. That is, total five sub channels are set. If the five sub channels are set, the beacon can be broadcasted via different sub channels when five different types of networks coexist.

Further, at least one sub channel is used for transmitting the beacon in one or more different types of networks using one channel. At least one sub channel may be specified according to the service provided by one or more types of networks.

FIG. 24(b) shows an example of setting five sub channels composed of a narrow band in one channel, similar to 24 (a). Further, some or all of the sub channels may be specified according to the service level. In other words, at least one sub channel composed of the narrow band is set in one channel and the specified sub channel is used according to the service level provided by the communication network, that is, the specific sub channel is used for a network for providing a service which is sensitive to the interference. For example, the sub channel which is located at the center of the five sub channels may be specified to be used for the network for providing the service having the level 1.

If the usable service level is specified to some or all of the sub channels, it is possible to facilitate the detection of the different type of network, rapidly and stably allocate the frequency according to the service characteristics, and realize high-quality communication. For example, if a network for providing a service having a low level first uses a channel and a network for providing a service having a high level enters the channel later, it can be determined whether the channel is available or not, by checking the sub channel which is specified to be used by the service having the high level.

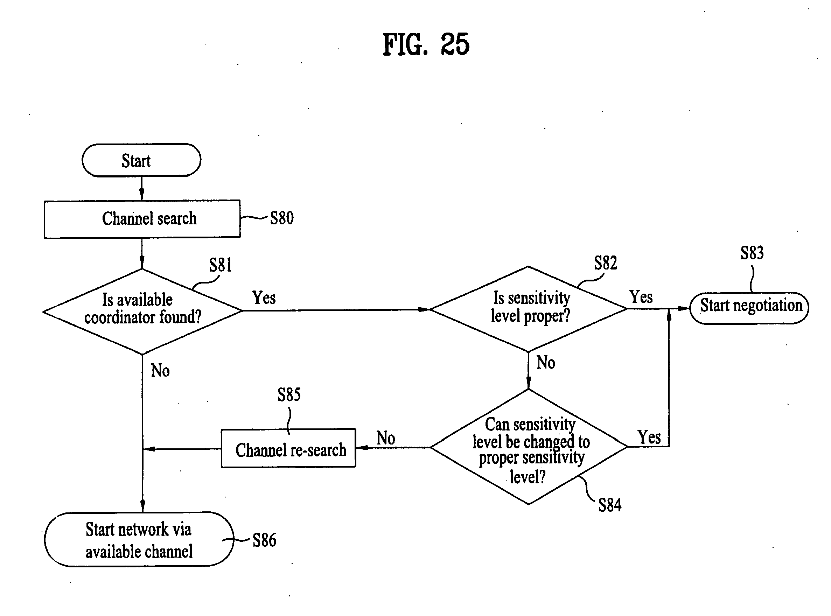

FIG. 25 is a flowchart supporting the understanding of the present invention.

With regard to Fig. 25, it is assumed that the common codes are transmitted such that one or more different types of networks detect each other and the common codes include the service level, that is, the sensitivity level information indicating the sensitivity to the interference. The embodiment of FIG. 9 shows the entrance to the same type of network which is already started, using the common codes and more particularly the common codes including the sensitivity level information.

In a step S80, a device which wants to start the communication first searches for an available channel. At this time, it can be checked whether the channel is available or not, by checking whether a common channel is present.

In a step S81, before the communication network is started by searching for the channel, it is checked whether the same type of network is started. The same type of network indicates a network which can receive scheduling information via the same coordinator and perform the communication. If the same type of network, that is, the available coordinator, is found in the step S81, the service level transmitted from the available coordinator, for example, the sensitivity level information indicating the sensitivity to the interference is checked in a step S82.

At this time, if the sensitivity level provided by the same type of network which is already started is equal to or higher than the service level which will be provided by the device, the device negotiates with the coordinator, receives the scheduling information, and transmits/receives the service in a step S83.

However, if the sensitivity level provided by the same type of network which is already started is lower than the service level which will be provided by the device, it is impossible to ensure the quality of the service which will be provided by the device. Accordingly, it is checked whether the sensitivity level provided by the same type of network which is already started is changed to be equal to or higher than the service level which will be provided by the device.

At this time, it may be checked whether a different type of network for providing a service having a higher level exists in the current channel. That is, if the different type of network for providing the service having the higher level exists in the current channel, a probability that the sensitivity level provided by the same type of network which is already started cannot be changed to be equal to or higher than the service level which will be provided by the device is increased.

If it is determined that the sensitivity level provided by the same type of network which is already started can be changed in a step S84, then the negotiation is started with the condition that the sensitivity level is changed in the step S83. However, if it is determined that the sensitivity level provided by the same type of network which is already started cannot be changed in a step S84, then the channel is re-searched for in a step S85. At this time, if another available channel is present, the network is started via the available channel.

It is possible to check the existence of the same type of network as well as the different type of network and the region, by using the common codes, and allow the entrance to the same type of network, while ensuring high communication quality, by transmitting the common codes including the service level such as the sensitivity level in the common channel.

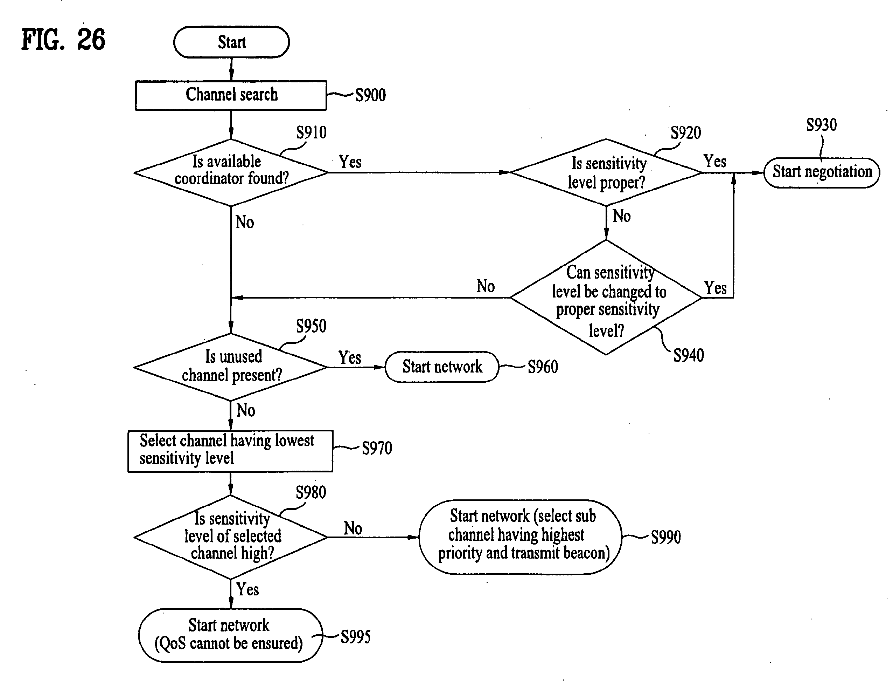

FIG. 26 it a flowchart relating to a device having a high service level and supporting the understanding of the present invention.

With regard to Fig. 26, it is assumed that the common codes are transmitted such that one or more different types of networks detect each other and the common codes include the service level, that is, the sensitivity level information indicating the sensitivity to the interference. FIG. 26 shows an example of the entrance to the different type of network which is already started, using the common codes and more particularly the common codes including the sensitivity level information.

The steps S900 to S950 of FIG. 26 are equal to the steps S80 and S85 of the embodiment shown in FIG. 25. These steps may be performed or, as shown in FIG. 26, if the same type of network is not found in the step S900 of searching for the channel, the network may be started using the unused channel in the step S960. In addition, if all the channels are used by the different types of networks, the method progresses to the step S970.

Using the result of receiving the common codes including the sensitivity level information from the network which performs the communication via each channel, a channel having a lowest sensitivity level is selected in the step S970.

If it is determined that the sensitivity level of the channel selected in the step S970 is low, for example, the level 3 in a step S980, the communication is started. Since the service level of the different type of network which first performs the communication is low, although the network is started via the same channel so as to perform the communication, a probability that the communication of the different type of network which first performs the communication is not influenced is increased.

At this time, in the above-described example, as described above, if a plurality of sub bands composed of the narrow band is set in one channel, the beacon is transmitted using the sub band used in the different type of network which first performs the communication and another sub band such that a collusion probability is further reduced. Further, if some or all of the plurality of sub bands is specified so as to be used for a service having a high sensitivity level, the beacon can be transmitted using the specified sub band.

If the interference occurs due to the signal of the different type of networks while the network is started and the communication is performed by the above-described method, the common codes indicating that the interference occurs may be transmitted. Similarly, the common codes indicating that the interference occurs may be received from the different type of network. In this case, any one of the networks may reduce the power or the data transfer rate in order to maintain coexistence. At this time, it is preferable that the power or the data transfer rate is reduced by a network for providing a service having a low sensitivity level with respect to the interference, such as file transfer.

Although the channel having the lowest sensitivity level is selected in the step S970, if it is determined that the sensitivity level of the selected channel is high in the step S980, for example, if it is determined that the sensitivity level is the level 1, the network may be started. Since two or more different types of networks for providing the service having the high sensitivity level with respect to the interference coexists in one channel, the service quality cannot be ensured.

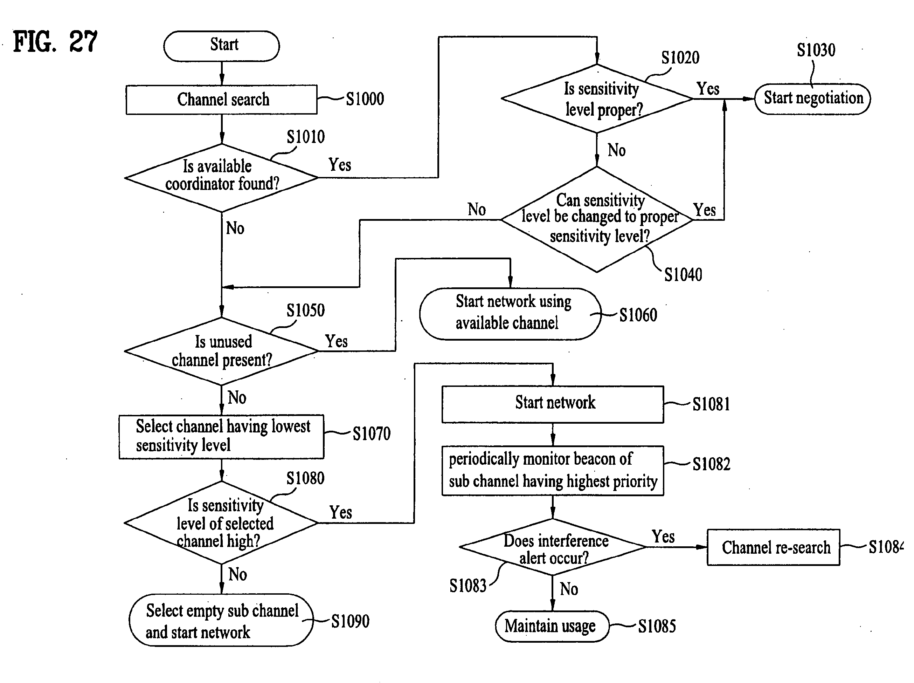

FIG. 27 is a flowchart illustrating relating to a device having a low service level and serving a better understanding of the present invention.

Even in Fig. 27, it is assumed that the common cods are transmitted such that one or more different types of networks detect each other and the common codes include the service level, that is, the sensitivity level information indicating the sensitivity to the interference. FIG. 27 shows an example of the entrance to the different type of network which is already started, using the common codes and more particularly the common codes including the sensitivity level information. In particular, FIG. 27 shows the entrance to the different type of network if the sensitivity level of the service which is desired to be provided by the device is low.

The steps S1000 to S1050 of FIG. 27 are equal to the steps S80 and S85 of the embodiment shown in FIG. 25. These steps may be performed or, as shown in FIG. 27, if the same type of network is not found in the step S1000 of searching for the channel, the network may be started using the unused channel in the step S1060. In addition, if all the channels are used by the different types of networks, the method progresses to the step S1070.

Using the result of receiving the common codes including the sensitivity level information from the network which performs the communication via each channel, a channel having a lowest sensitivity level is selected in the step S1070.

If it is determined that the sensitivity level of the channel selected in the step S1070 is low, for example, the level 3 in a step S1080, the communication is started in a step S1090. Since the service level of the different type of network which first performs the communication is low, although the network is started via the same channel so as to perform the communication, a probability that the communication of the different type of network which first performs the communication is not influenced is increased.

At this time, in the above-described example, as described above, if a plurality of sub bands composed of the narrow band is set in one channel, the beacon is transmitted using the sub band used in the different type of network which first performs the communication and another sub band such that a collusion probability is further reduced. Further, if some or all of the plurality of sub bands is specified so as to be used for a service having a high sensitivity level, the beacon can be transmitted using the specified sub band.

If the interference occurs due to the signal of the different type of networks while the network is started and the communication is performed by the above-described method, the common codes indicating that the interference occurs may be transmitted. Similarly, the common codes indicating that the interference occurs may be received from the different type of network. In this case, any one of the networks may reduce the power or the data transfer rate in order to maintain coexistence. At this time, it is preferable that the power or the data transfer rate is reduced by a network for providing a service having a low sensitivity level with respect to the interference, such as file transfer. If the different types of networks are equal or similar to each other in the sensitivity for the interference, an upper layer may instruct any one or both of the different types of networks to change the transmission method.

Although the channel having the lowest sensitivity level is selected in the step S1070, if it is determined that the sensitivity level of the selected channel is high in the step S1080, for example, it is determined that the sensitivity level is the level 1, the network may be started in a step S1801. In this case, since it is assumed that the sensitivity level of the service which is desired to be the device for performing the present process is low, although the sensitivity level of the service of the different type of network which already performs the communication is high, a probability that the communication can be simultaneously performed without causing the interference in the service of the different type of network which already performs the communication is high.

That is, in the step S1081, the network is started. Even in this case, similar to the step S1090, as described above, if a plurality of sub bands composed of the narrow band is set in one channel, the beacon is transmitted using the sub band used in the different type of network which first performs the communication and another sub band such that a collusion probability is further reduced.

Further, in a step S1082, the common codes transmitted from the different type of network which already performs the communication are periodically monitored. In a step S1083, it is determined whether the information indicating that the interference occurs is included in the common codes received from the different type of network which already performs the communication. If it is determined that the information indicating that the interference occurs is included in the common codes, then the transmission power or the data transfer rate is reduced or the channel is changed to another channel in a step S1084 and the communication is continuously performed.

If it is determined that the information indicating that the interference occurs is not included in the common codes received from the different type of network which already performs the communication, then the communication can be maintained on that channel as described above.

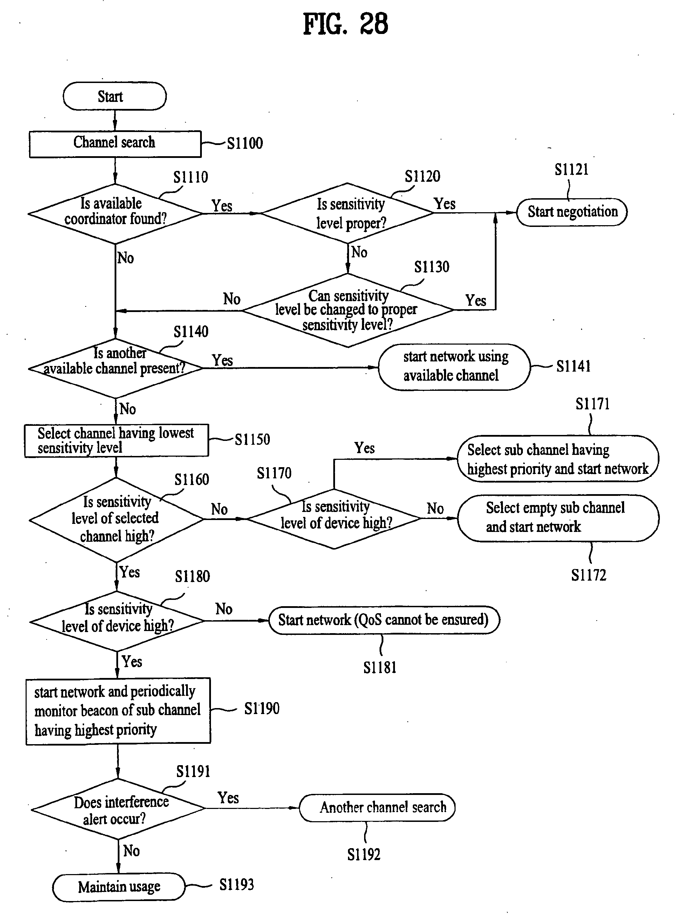

FIG. 28 is a flowchart serving a better understanding of the present invention.

Even in Fig. 28, it is assumed that the common codes are transmitted such that one or more different types of networks detect each other and the common codes include the service level, that is, the sensitivity level information indicating the sensitivity to the interference. In FIG. 28, all the embodiments of FIGs. 25 to 27 are shown. That is, FIG. 28 shows an example of the entrance to the same type of network which is already started, using the common codes and more particularly the common codes including the sensitivity level information, an example of starting a new network via an empty channel when the same type of network not present or the entrance to the same type of network is impossible, and an example of starting the network so as to coexist with the different type of network when an empty channel is not present.

The description of the steps is equal to the description of the steps shown in FIGs. 25 to 27. However, in FIG. 28, steps S1170 and 1180 of checking whether the sensitivity level of the device is high or lower regardless of the level of the service which is desired to be provided by the device, for example, the sensitivity level for the interference are further included.

It will be apparent to those skilled in the art that various modifications and variations can be made in the present invention without departing from the scope of the invention that covers the modifications and variations of this invention within the scope of the appended claims, and is not limited to the embodiments described herein.

### Industrial Applicability

The present specification can be used in network communication.

## Claims

1. A method for determining whether to use a specific channel for performing communication in an environment in which a plurality of networks are coexistable, the method comprising: receiving (S10) at least one signal including first preamble information on a specific channel of a specific frequency band from one or more networks,
**characterized in that** the method further comprises:
generating (S11) at least one correlation value by correlating the first preamble information and stored second preamble information,
wherein the second preamble information corresponds to each of one or more different networks;
determining (S12) whether the specific channel is available or not based on the at least one correlation value;
wherein if the at least one correlation value exceeds a predetermined value, the specific channel is determined not to be available; and
searching an available channel for performing communication, when the specific channel is not available.

2. The method according to claim 1, **characterized in that**:
if the at least one correlation value does not exceed the predetermined value, the specific channel is determined to be available.

3. The method according to claims 1 to 2, **characterized in that**:
the preamble information is composed of a pattern generated in consideration of all signals received from a plurality of channels.

4. The method according to claims 1 to 3, **characterized in that**:
at the determining, a measured period between at least two correlation values is further used.

5. The method according to claims 1 to 4, **characterized in that**:
the received signal is a preamble signal composed of a narrowband signal.

6. The method according to claims 1 to 5, **characterized in that**:
the received signal is composed of a narrowband signal with a pattern in which same data is repeated.

7. The method of according to claims 1 to 2, **characterized in that**:
the received signal is filtered such that the received signal corresponds to a reception-side channel bandwidth.

8. The method of according to claims 1 to 2, **characterized in that**:
at the determining, down-sampled signal of the received signal is used.

9. A detection device(30) for determining whether to use a specific channel for performing communication in an environment in which a plurality of networks are coexistable, the detection device comprising:
an interface unit configured to receive and/or transmit data;
a memory (35);
a correlator (34) and
a controller configured to control the interfacing unit and the memory, wherein the interface unit is configured to receive at least one signal including first preamble information on a specific channel of a specific frequency band from one or more networks,
**characterized in that**:
the memory (35) is configured to store second preamble information corresponding to each of one or more different networks,
the correlator (34) is configured to generate at least one correlation value by correlating the first preamble information and the second preamble information,
the controller is configured to:
determine whether the specific channel is available or not, based on the at least one correlation value,
wherein if the at least one correlation value exceeds a predetermined value, the specific channel is determined not to be available, and
search an available channel for performing communication, when the specific channel is not available.

10. The detection device according to claim 9, **characterized in that**:
if the at least one correlation value does not exceed the predetermined value, the specific channel is determined to be available.

11. The detection device according to claims 9 to 10, **characterized in that**:
the received signal is a preamble signal composed of a narrowband signal.

12. The detection device according to claims 9 to 11, **characterized in that**:
the received signal is composed of a narrowband signal with a pattern in which same data is repeated.

13. The detection device according to claims 9 to 12, **characterized by** further comprising a down sampler (65),
wherein the down sampler (65) is configured to perform sampling the received signal at a low sampling rate,
wherein the controller uses the down-sampled signal for the determining.

## Patentansprüche

1. Verfahren zum Bestimmen, ob ein spezifischer Kanal für die Ausführung einer Kommunikation in einer Umgebung, in der mehrere Netze nebeneinander vorhanden sind, verwendet werden soll, wobei das Verfahren umfasst: Empfangen (S 10) wenigstens eines Signals, das erste Präambel-Informationen enthält, auf einem spezifischen Kanal eines spezifischen Frequenzbandes von einem oder mehreren Netzen,
**dadurch gekennzeichnet, dass** das Verfahren ferner umfasst:
Erzeugen (S11) wenigstens eines Korrelationswertes durch Korrelieren der ersten Präambel-Informationen mit gespeicherten zweiten Präambel-Informationen,
wobei die zweiten Präambel-Informationen jedem von einem oder mehreren verschiedenen Netzen entsprechen;
Bestimmen (S 12), ob der spezifische Kanal verfügbar ist oder nicht, anhand des wenigstens einen Korrelationswertes;
wobei dann, wenn der wenigstens eine Korrelationswert einen vorgegebenen Wert übersteigt, der spezifische Kanal als nicht verfügbar bestimmt wird; und
Suchen eines verfügbaren Kanals für die Ausführung der Kommunikation, wenn der spezifische Kanal nicht verfügbar ist.

2. Verfahren nach Anspruch 1, **dadurch gekennzeichnet, dass**:
falls der wenigstens eine Korrelationswert den vorgegebenen Wert nicht übersteigt, der spezifische Kanal als verfügbar bestimmt wird.

3. Verfahren nach den Ansprüchen 1 bis 2, **dadurch gekennzeichnet, dass**:
die Präambel-Informationen aus einem Muster gebildet sind, das im Hinblick auf alle Signale, die von mehreren Kanälen empfangen werden, erzeugt wird.

4. Verfahren nach den Ansprüchen 1 bis 3, **dadurch gekennzeichnet, dass**:
bei der Bestimmung ferner eine gemessene Zeitdauer zwischen wenigstens zwei Korrelationswerten verwendet wird.

5. Verfahren nach den Ansprüchen 1 bis 4, **dadurch gekennzeichnet, dass**:
das empfangene Signal ein Präambel-Signal ist, das aus zwei Schmalbandsignalen gebildet ist.

6. Verfahren nach den Ansprüchen 1 bis 5, **dadurch gekennzeichnet, dass**:
das empfangene Signal aus einem Schmalbandsignal mit einem Muster, in dem sich gleiche Daten wiederholen, gebildet ist.

7. Verfahren nach den Ansprüchen 1 bis 2, **dadurch gekennzeichnet, dass**:
das empfangene Signal in der Weise gefiltert wird, dass das empfangene Signal einer empfangsseitigen Kanalbandbreite entspricht.

8. Verfahren nach den Ansprüchen 1 bis 2, **dadurch gekennzeichnet, dass**:
bei der Bestimmung ein abwärtsabgetastetes Signal des empfangenen Signals verwendet wird.

9. Detektionsvorrichtung (30) zum Bestimmen, ob für die Ausführung einer Kommunikation in einer Umgebung, in der mehrere Netze nebeneinander bestehen, ein spezifischer Kanal verwendet werden soll, wobei die Detektionsvorrichtung umfasst:
eine Schnittstelleneinheit, die konfiguriert ist, um Daten zu empfangen und/oder zu senden;
einen Speicher (35);
einen Korrelator (34); und
eine Steuereinheit, die konfiguriert ist, um die Schnittstelleneinheit und den Speicher zu steuern,
wobei die Schnittstelleneinheit konfiguriert ist, um wenigstens ein Signal, das erste Präambel-Informationen enthält, auf einem spezifischen Kanal mit einem spezifischen Frequenzband von einem oder mehreren Netzen zu empfangen,
**dadurch gekennzeichnet, dass**:
der Speicher (35) konfiguriert ist, um zweite Präambel-Informationen zu speichern, die jedem von einem oder mehreren verschiedenen Netzen entsprechen,
der Korrelator (34) konfiguriert ist, um durch Korrelieren der ersten Präambel-Informationen mit den zweiten Präambel-Informationen wenigstens einen Korrelationswert zu erzeugen,
die Steuereinheit konfiguriert ist, um:
zu bestimmen, ob der spezifische Kanal verfügbar ist oder nicht, anhand des wenigstens einen Korrelationswerts,
wobei dann, wenn der wenigstens eine Korrelationswert einen vorgegebenen Wert übersteigt, der spezifische Kanal als nicht verfügbar bestimmt wird, und
einen verfügbaren Kanal für die Ausführung der Kommunikation zu suchen, wenn der spezifische Kanal nicht verfügbar ist.

10. Detektionsvorrichtung nach Anspruch 9, **dadurch gekennzeichnet, dass**:
falls der wenigstens eine Korrelationswert den vorgegebenen Wert nicht übersteigt, der spezifische Kanal als verfügbar bestimmt wird.

11. Detektionsvorrichtung nach den Ansprüchen 9 bis 10, **dadurch gekennzeichnet, dass**:
das empfangene Signal ein Präambel-Signal ist, das aus einem Schmalbandsignal gebildet ist.

12. Detektionsvorrichtung nach den Ansprüchen 9 bis 11, **dadurch gekennzeichnet, dass**:
das empfangene Signal aus einem Schmalbandsignal mit einem Muster, in dem sich gleiche Daten wiederholen, gebildet ist.

13. Detektionsvorrichtung nach den Ansprüchen 9 bis 12, **dadurch gekennzeichnet, dass** sie ferner eine Abwärtsabtasteinrichtung (65) umfasst,
wobei die Abwärtsabtasteinrichtung (65) konfiguriert ist, um eine Abtastung des empfangenen Signals mit einer niedrigen Abtastrate auszuführen,
wobei die Steuereinheit das abwärtsabgetastete Signal für die Bestimmung verwendet.

## Revendications

1. Procédé pour déterminer s'il y a lieu d'utiliser un canal spécifique pour réaliser une communication dans un environnement dans lequel une pluralité de réseaux peuvent coexister, le procédé comprenant le fait de recevoir (S10) d'un ou de plusieurs réseaux au moins un signal comprenant une première information de préambule sur un canal spécifique d'une bande de fréquences spécifique,
**caractérisé en ce que** le procédé comprend en outre les opérations suivantes :
générer (S11) au moins une valeur de corrélation en corrélant la première information de préambule et une deuxième information de préambule stockée,
dans lequel la deuxième information de préambule correspond à chacun de un ou plusieurs réseaux différents ;
déterminer (S12) si le canal spécifique est disponible ou pas d'après ladite au moins une valeur de corrélation ;
dans lequel si ladite au moins une valeur de corrélation dépasse une valeur prédéterminée, le canal spécifique est déterminé comme étant non disponible ; et
rechercher un canal disponible pour réaliser la communication, quand le canal spécifique n'est pas disponible.

2. Procédé selon la revendication 1, **caractérisé en ce que**, si ladite au moins une valeur de corrélation ne dépasse pas la valeur prédéterminée, le canal spécifique est déterminé comme étant disponible.

3. Procédé selon les revendications 1 à 2, **caractérisé en ce que** l'information de préambule est composée d'un motif généré en prenant en compte tous les signaux reçus depuis une pluralité de canaux.

4. Procédé selon les revendications 1 à 3, **caractérisé en ce que**, à l'étape de détermination, on utilise en outre une période mesurée entre au moins deux valeurs de corrélation.

5. Procédé selon les revendications 1 à 4, **caractérisé en ce que** le signal reçu est un signal de préambule composé d'un signal à bande étroite.

6. Procédé selon les revendications 1 à 5, **caractérisé en ce que** le signal reçu est composé d'un signal à bande étroite ayant un motif dans lequel les mêmes données sont répétées.

7. Procédé selon les revendications 1 à 2, **caractérisé en ce que** le signal reçu est filtré de telle manière que le signal reçu correspond à une largeur de bande de canal côté réception.

8. Procédé selon les revendications 1 à 2, **caractérisé en ce que**, à l'étape de détermination, on utilise un signal échantillonné avec abaissement du signal reçu.

9. Dispositif de détection (30) pour déterminer s'il y a lieu d'utiliser un canal spécifique pour réaliser une communication dans un environnement dans lequel une pluralité de réseaux peuvent coexister, le dispositif de détection comprenant :
une unité d'interface configurée pour recevoir et/ou transmettre des données ;
une mémoire (35) ;
un corrélateur (34) et
un dispositif de commande configuré pour commander l'unité d'interface et la mémoire,
dans lequel l'unité d'interface est configurée pour recevoir d'un ou de plusieurs réseaux au moins un signal comprenant une première information de préambule sur un canal spécifique d'une bande de fréquences spécifique,
**caractérisé en ce que** :
la mémoire (35) est configurée pour stocker une deuxième information de préambule correspondant à chacun de un ou plusieurs réseaux différents,
le corrélateur (34) est configuré pour générer au moins une valeur de corrélation en corrélant la première information de préambule et la deuxième information de préambule,
le dispositif de commande est configuré pour :
déterminer si le canal spécifique est disponible ou pas, d'après ladite au moins une valeur de corrélation,
dans lequel si ladite au moins une valeur de corrélation dépasse une valeur prédéterminée, le canal spécifique est déterminé comme étant non disponible ; et
rechercher un canal disponible pour réaliser la communication, quand le canal spécifique n'est pas disponible.

10. Dispositif de détection selon la revendication 9, **caractérisé en ce que**, si ladite au moins une valeur de corrélation ne dépasse pas la valeur prédéterminée, le canal spécifique est déterminé comme étant disponible.

11. Dispositif de détection selon les revendications 9 à 10, **caractérisé en ce que** le signal reçu est un signal de préambule composé d'un signal à bande étroite.

12. Dispositif de détection selon les revendications 9 à 11, **caractérisé en ce que** le signal reçu est composé d'un signal à bande étroite ayant un motif dans lequel les mêmes données sont répétées.

13. Dispositif de détection selon les revendications 9 à 12, **caractérisé en ce qu'**il comprend en outre un échantillonneur abaisseur (65),
dans lequel l'échantillonneur abaisseur (65) est configuré pour exécuter l'échantillonnage du signal reçu avec une vitesse d'échantillonnage faible,
dans lequel le dispositif de commande utilise le signal échantillonné avec abaissement pour la détermination.
